Europäisches Patentamt

European Patent Office

Office européen des brevets

(19)

(11) **EP 0 996 924 B1**

(12) **EUROPÄISCHE PATENTSCHRIFT**

| | |
|---|---|
| (45) Veröffentlichungstag und Bekanntmachung des Hinweises auf die Patenterteilung: **09.04.2003 Patentblatt 2003/15** | (51) Int Cl.⁷: **G06K 9/00** |
| (21) Anmeldenummer: **98931876.1** | (86) Internationale Anmeldenummer: **PCT/CH98/00312** |
| (22) Anmeldetag: **16.07.1998** | (87) Internationale Veröffentlichungsnummer: **WO 99/004358 (28.01.1999 Gazette 1999/04)** |

(54) **VERFAHREN ZUR ERMITTLUNG EINES IDENTIFIKATIONSCODES AUS FINGERABDRUCKBILDERN**

METHOD FOR DETERMINING AN IDENTIFICATION CODE FROM FINGERPRINT IMAGES

PROCEDE POUR DETERMINER UN CODE D'IDENTIFICATION A PARTIR D'IMAGES D'EMPREINTES DIGITALES

| | |
|---|---|
| (84) Benannte Vertragsstaaten: **AT CH DE ES FR GB IT LI NL SE** | (56) Entgegenhaltungen: |
| | EP-A- 0 339 527     EP-A- 0 466 039 |
| (30) Priorität: **18.07.1997 CH 176897** | EP-A- 0 513 612     EP-A- 0 696 012 |
| | WO-A-93/07584     US-A- 3 668 633 |
| (43) Veröffentlichungstag der Anmeldung: **03.05.2000 Patentblatt 2000/18** | • ASAI K ET AL: "FINGERPRINT IDENTIFICATION SYSTEM" USA-JAPAN COMPUTER CONFERENCE PROCEEDINGS, TOKYO, AUGUST 26 - 28, 1975, Nr. CONF. 2, 26. August 1975, Seiten 30-35, XP002039013 AMERICAN FEDERATION OF INFORMATION PROCESSING SOCIETIES |
| (73) Patentinhaber: **Kaba Schliesssysteme AG 8620 Wetzikon (CH)** | |
| (72) Erfinder: **HAUKE, Rudolf D-89168 Niederstotzingen (DE)** | • YOSHIKAWA H ET AL: "A MICROCOMPUTE-BASED PERSONAL IDENTIFICATION SYSTEM" INDUSTRIAL APPLICATIONS OF MICROELECTRONICS, TOKYO, OCT. 22 - 26, 1984 OCTOBER 22 - 26, 1984, Bd. 1, 22. Oktober 1984, Seiten 105-109, XP002039014 INSTITUTE OF ELECTRICAL AND ELECTRONICS ENGINEERS |
| (74) Vertreter: **Frei, Alexandra Sarah et al Frei Patentanwaltsbüro Postfach 768 8029 Zürich (CH)** | • R. REITTER ET AL.: "BIOMAC, a Versatile Biometric Verification Machine for Access Control" IAPR WORKSHOP ON COMPUTER VISION, 12. Oktober 1988, Seiten 120-23, XP002083140 |

**Beschreibung**

Die Erfindung betrifft ein Verfahren und eine Vorrichtung zur Ermittlung von Identifikationscodes aus Fingerabdruckbildern bzw. aus digitalen Grauwertbildern gemäss Oberbegriffen der Patentansprüche 1 und 25. Diese dienen zur automatischen Identifikation von Fingerabdrücken einer Person in Echtzeit oder von einem Bilddokument mittels eines elektronischen Bildaufnahmegeräts, z.B. einer Videokamera. Damit kann aus in digitaler Form vorliegenden Fingerabdruckbildern ein Code generiert werden, mit welchem die zugehörigen Personen identifizierbar sind. Es sind verschiedene Verfahren bekannt, um Fingerabdruckbilder aufzunehmen. Meist wird zur Kontrasterzeugung der Finger auf eine geeignete optische Vorrichtung gedrückt, welche mittels Prismen und des Prinzips der verhinderten Totalreflexion ein Bild der Hautlinien erzeugt. Hautlinienbilder können aber auch direkt elektronisch, z.B. kapazitiv, aufgenommen werden. Zur Charakterisierung eines Fingerabdrucks werden bisher meist Minutien aller Arten (Verzweigungen, Linienenden, Einschlüsse, Inseln, Unterbrüche, Kreuzungen, Trifurkationen etc.) verwendet. Dies gilt vor allem für die weitverbreiteten forensischen Anwendungen, welche eine sehr aufwendige genaue Analyse dieser Minutien-Merkmale (Lage und Art der Minutie sowie ihre Orientierung) erfordern, die dementsprechend hohen Speicherbedarf, aufwendige Programme und grosse Verarbeitungszeiten bzw. grosse Rechenleistungen erfordern.

Die Charakterisierung mittels bisherigen Minutienverfahren weist eine Reihe von weiteren gravierenden Nachteilen auf: Zum einen können Fehler und Ungenauigkeiten der optischen Bildaufnahme zu Verwechslungen mit Minutien führen, d.h. ein Bildaufnahmefehler erzeugt scheinbare Minutien, welche real gar nicht vorhanden sind, und umgekehrt können reale Minutien auch nicht erkannt werden infolge schlechter Bildaufnahme. Zudem kann auch das reale Fingerlinienbild einer Person Minutienfehler enthalten, z.B. durch Verletzungen der Haut, durch Verunreinigungen oder durch schlechte Erfassbarkeit der Hautlinien, so dass z.B. Unterbrüche im Bild erscheinen, welche in Wirklichkeit nicht vorhanden sind. Beispielsweise kann durch eine einfache Schnittverletzung ein grosser differenter Minutiensatz, d.h. scheinbare Linien-enden, längs der Schnittkante gebildet werden. Damit ist das aufgenommene Minutienbild einer Person nicht immer gleich, was wiederum aufwendige Auswertungsprogramme erfordert. Aus diesen Gründen ist die Erkennung von Fingerabdrücken mittels bisherigen Minutienverfahren sowohl bezüglich Rechenaufwand wie bezüglich Speicherbedarf sehr aufwendig.
Auch andere bekannte einfache Verfahren zur Ermittlung von Identifikationscodes aus Linienabständen oder aus Gradienten konnten noch keine genügende Erkennungssicherheit mit kurzen Codes ergeben.

Auf der andern Seite besteht ein grosser Bedarf zur Identifikation und Verifikation von Personen mit einfachen Mitteln für viele Anwendungen des täglichen Gebrauchs, z.B. für Zugangsberechtigungen, für Zahlungen mittels Kreditkarten, zur Identifikation für rechtliche oder soziale Zwecke, z.B. zur Passkontrolle, oder zur Überprüfung von persönlichen Ausweisen, z.B. für Sozialprogramme usw. Für all diese nicht-forensischen Anwendungen wäre es notwendig, einen einfacheren und sicheren biometrischen Erkennungscode zu finden, welcher sehr wenig Speicherplatz benötigt und damit auch auf kostengünstigen Datenträgern als Idetifikationsmedien verwendbar ist. Insbesondere für kostengünstige Magnetkarten, für Auweise mit einem 1- oder 2-dimensionalen Barcode oder für andere kostengünstige Datenträger, insbesondere auch für Chips mit EEPROM Speichern von Smartcards und berührungslosen Datenträgersystemen. Dies ist auch unbedingt notwendig für alle Anwendungen, welche die Abwicklung von Geschäften mit relativ geringen Geldwerten betreffen, z.B. im Bereich des täglichen Konsums, an Automaten mit relativ vielen Benützern. Dann muss der Identifikationsträger sehr kostengünstig sein, d.h. mit geringem Speicherbedarf und relativ einfacher Auswertung in kleinen dezentralen Rechnern von Prüfstationen sicher anwendbar sein.

Es sind schon verschiedene Verfahren bekannt geworden zur möglichst vollständigen automatischen Erfassung der Informationen eines Fingerabdruckbildes, wie dies für forensische Anwendungen unbedingt notwendig ist. Dies durch möglichst vollständige Erfassung und Verarbeitung verschiedener Merkmale von Fingerabdruckbildern. So offenbart die WO 93/07584 eine möglichst vollständige Erfassung aller Irregularitäten und Merkmale eines Fingerabdruckbildes. Dazu werden Richtungen und Krümmungen der Fingerlinien in jedem Bildpunkt bestimmt und möglichst alle Arten von Irregularitäten wie Minutien, Deltas, Cores etc. erfasst und charakterisiert. Die EP 0696012 offenbart ein Verfahren zur Bestimmung und Berechnung eines Musters von Fingerlinienrichtungen (Gradienten), z.B. von 32 x 32 Bildpunkten eines Fingerlinienbildes, wobei für jeden Bildpunkt ein Richtungswert bestimmt wird, indem aus Subregionen um jeden dieser Bildpunkte je Gradientenverteilungen bestimmt und daraus als charakteristischer Wert u.a. je eine Hauptrichtung bestimmt wird. Dies stellt jedoch nur eine mögliche Verarbeitung eines Merkmals (Gradienten) eines Fingerlinienbildes dar.
Die EP 0513612 offenbart ein Verfahren zur möglichst vollständigen Erfassung aller Minutien eines Fingerlinienbildes in 3 x 3 Pixel-Feldern. Dabei werden mit den 3 x 3 Pixel-Feldern als Musterarten "Endpunkte", "V-Muster", "Y-Muster" oder "Durchgänge" dargestellt. Aus diesen Merkmalswerten kann ein Identifikationscode gebildet werden. Mit dieser Minutien-Darstellung soll die ganze Information eines Fingerlinienbildes möglichst vollständig erfasst werden.

All diese bekannten Verfahren, welche eine möglichst vollständige automatische Erfassung aller Informationen eines Fingerabdruckbildes anstreben, wie dies für forensische Anwendungen notwendig ist, sind jedoch sehr aufwändig, benötigen sehr viel Speicherplatz und Rechenleistung und können deshalb keine Lösung der nachstehenden ganz anderen Aufgabe angeben.

Aufgabe der vorliegenden Erfindung ist es daher, ein Verfahren zu schaffen mit einem besseren Verhältnis von notwendiger Codelänge und Rechenaufwand bezogen auf die Erkennungsgenauigkeit und insbesondere auch bei genügend hoher Erkennungsgenauigkeit einen kürzeren und einfacheren Code zu erzeugen, welcher weniger als 100 Byte, beispielsweise nur 36 Byte oder noch weniger aufweisen kann. Der Code soll auch unempfindlicher sein bezüglich Bildfehler und Aufnahmefehler sowie der Wahl des Bildausschnittes. Überdies soll die Erzeugung dieses Codes z.B. auch an dezentralen Stationen mit einfachen, kostengünstigen Rechnern möglich sein.

Diese Aufgabe wird erfindungsgemäss gelöst mit einem Verfahren nach Patentarispruch 1 und einer Vorrichtung nach Anspruch 25. Durch die Verwendung von mindestens zweien der unabhängigen, bzw. orthogonalen Merkmale Linienabstand L, Gradienten G, Krümmungen K und Bifurkationen B wird im wesentlichen eine Multiplikation der Erkennungsgenauigkeiten der beiden einzelnen Merkmale erreicht und mit der Bestimmung von komprimierten Merkmalswerten aus Häufigkeitsverteilungen der Merkmale werden auf einfache Art Code-Merkmale bestimmt, welche zudem noch weniger abhängig sind von Aufnahme- und Bildfehlern. Mit dem erfindungsgemässen Verfahren können, ausgehend von wenigen Merkmalswerten bzw. sehr kurzen Identifikationscodes für einfache Anwendungen, bei Bedarf auch höhere Erkennungsgenauigkeiten erreicht werden durch Erweitern der Anzahl Merkmale bzw. Verlängern des Codes. Vorteilhafte Weiterbildungen der Erfindung sind in den abhängigen Patentansprüchen angegeben.

In der folgenden Erläuterung der verschiedenen Verfahrensschritte sowie anhand von Figuren und Beispielen wird die Erfindung weiter erläutert.

Dabei zeigen:

Fig. 1          eine Bestimmung der Linienabstände L in x-Richtung

Fig. 2          eine Bestimmung von Linienabständen aus Grauwertbildern

Fig. 3          eine Bestimmung von L in x- und y-Richtung

Fig. 4          Häufigkeitsverteilungen HL in Funktion der Abstandslänge L

Fig. 5          eine Klasseneinteilung mit Bestimmung von Klassenwerten

Fig. 6          eine Bestimmung von Gradienten G

Fig. 7          eine Bestimmung von Krümmungen K

Fig. 8          eine Darstellung von Klassenwerten von Gradientenverteilungen HG verschiedener Bilder

Fig. 9 - 11     verschiedene Fingerabdruckbilder I

Fig. 12         eine Bestimmung von Bifurkationen B in einem skelettierten Bild

Fig. 13         eine Bestimmung von Bifurkationsabständen LB

Fig. 14         eine Bestimmung von Bifurkationsflächen F

Fig. 15         ein weiteres Beispiel einer Bestimmung von Bifurkationen B

Fig. 16         eine Segmenteinteilung und eine Bildüberdeckung mit einem Maschengitter

Fig. 17         eine Darstellung möglicher Bildausschnitte

Fig. 18         eine schematische Darstellung des erfindungsgemässen Verfahrens

Fig. 19a, b    Beispiele von definierten Bifurkationen

Fig. 20         eine refindungsgemässe Vorrichtung zur Durchführung des Verfahrens

Fig. 21         eine Illustration zur Klassifizierung von Bifurkationen.

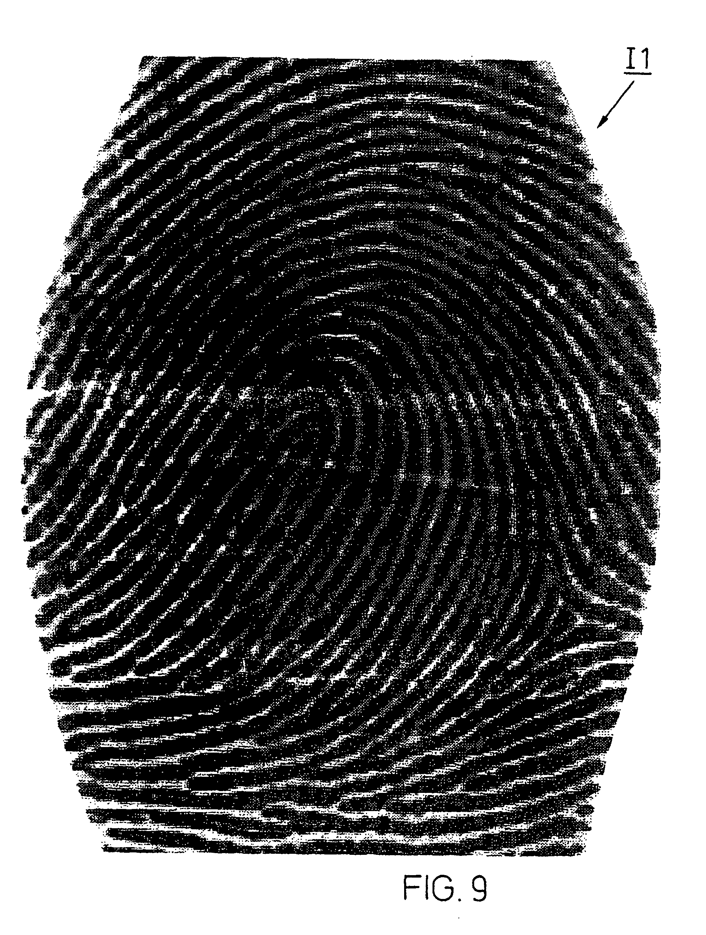

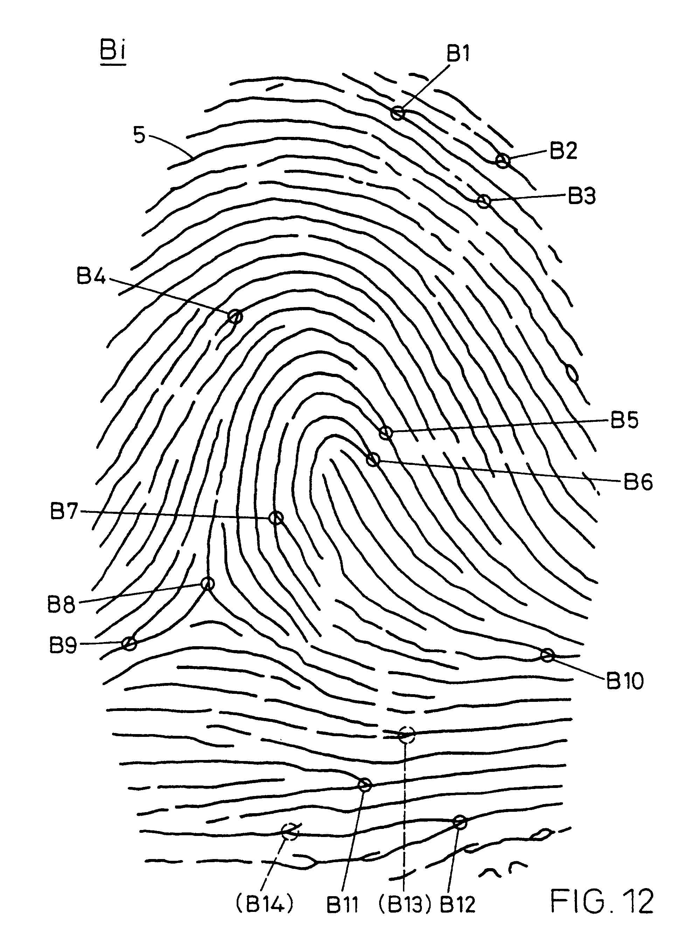

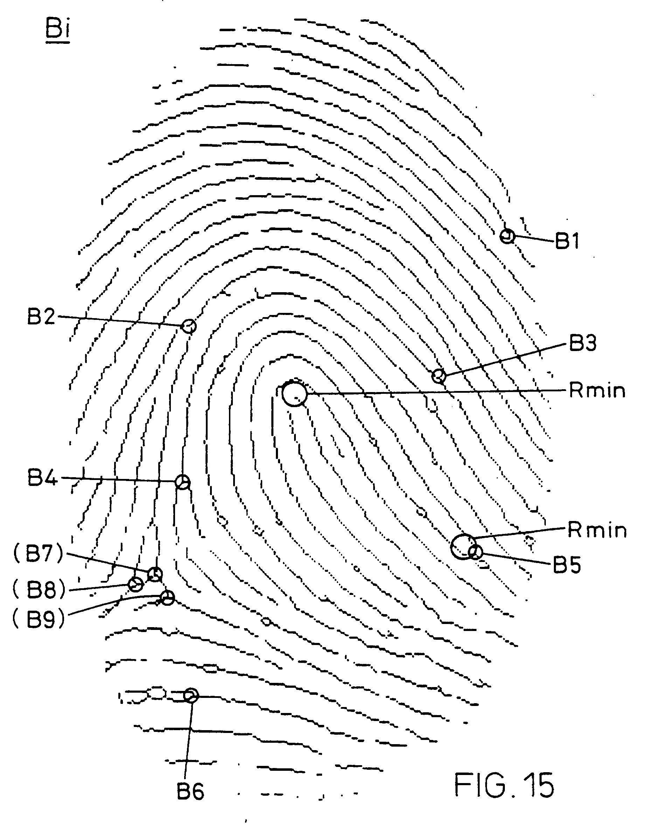

Zur Bilderfassung wird mittels bekannter Verfahren ein digitales Grauwertbild eines Fingerabdrucks in geeigneter Rasterung von z.B. 512 x 512 Pixel aufgenommen (Fig. 9 - 11). Dieses digitale Bild kann entweder direkt zur Bestimmung der Merkmale verwendet werden oder es kann daraus durch Bildvorverarbeitung, im speziellen durch Binarisierung und Skelettierung, ein Fingerlinienbild erzeugt werden (Fig. 12 und 15).
Von diesem einmal erzeugten Bild werden in der Folge verschiedene Merkmale herausgezogen und in weiteren Verarbeitungsschritten zu einem Identifikationscode C komprimiert, welcher der gewünschten Anwendung bezüglich Codelänge und Erkennungsgenauigkeit entspricht.

Fingerprint-Merkmale

Es werden die folgenden vier im wesentlichen unabhängigen bzw. orthogonalen Merkmale verwendet und deren Häufigkeitsverteilungen bestimmt:

L     Linienabstände
G     Gradienten
K     Krümmungen
B     Bifurkationen (Verzweigung der Fingerlinien)

Merkmal Linienabstände L

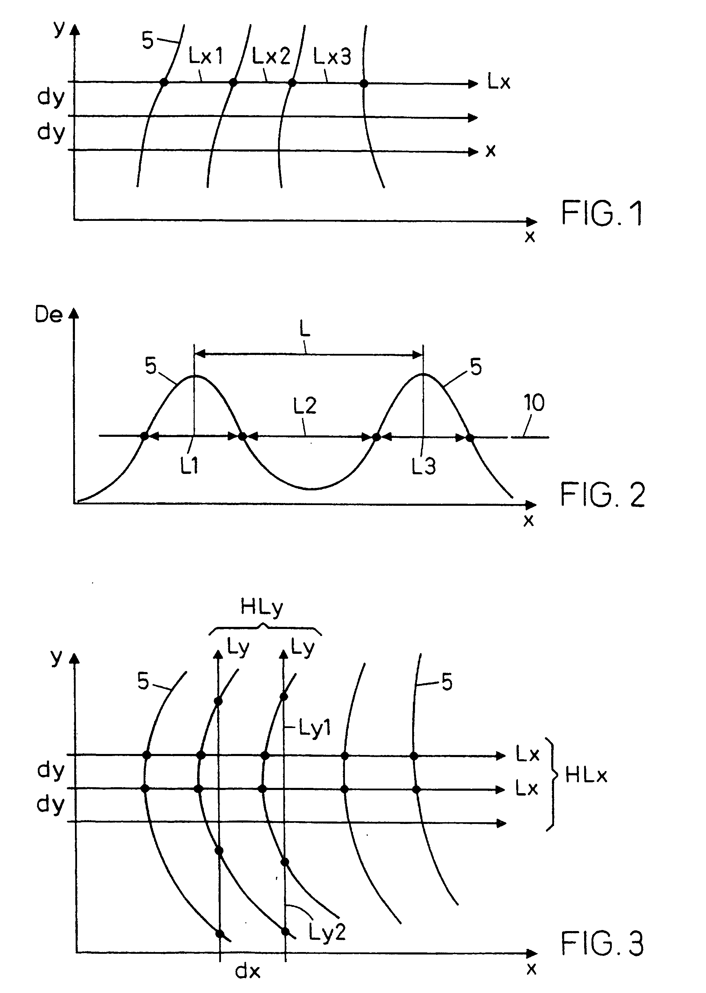

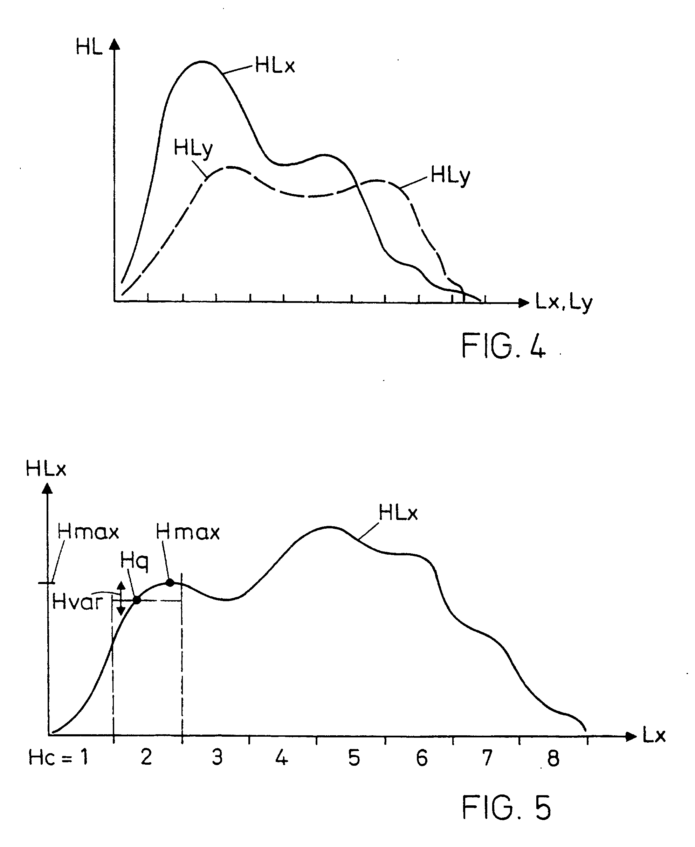

Die Linienabstände (Abstandslängen) L werden, wie anhand von Fig. 1 und 2 illustriert wird, definiert als Abstände zwischen zwei aufeinanderfolgenden Fingerlinien 5, wobei die Fingerlinie eine Breite 0 aufweist, d.h. entsprechend den Abständen der Mitten zweier aufeinanderfolgender Fingerlinien, welche in Richtung eines Projektionsstrahls X aufgenommen werden. Für vorverarbeitete, skelettierte Bilder entspricht dies dem Linienabstand (mit Linienbreite 0, Fig. 1), während aus digitalen Grauwertbildern gemäss Fig. 2 zwischen zwei aufeinanderfolgenden Fingerlinien der Abstand L wie folgt zu berechnen ist: $L = L2 + 1/2 \times (L1 + L3)$. Wenn L1 und L3 den Fingerlinienbreiten entsprechen bei einem geeignet gewählten Grau-Schwellwert 10. Mit diesem Schwellwert 10 kann auch eine Binarisierung durchgeführt werden, indem die Grauwerte De über dem Schwellwert als 1 und Grauwerte unter dem Schwellwert 10 als 0 bezeichnet werden. Zur Eliminierung von Fehlern einzelner Bildpunkte (Pixel) kann als Bedingung auch vorgegeben werden, dass die Linienbreiten L1, L3 und auch der Abstand L2 z.B. mindestens drei aufeinanderfolgende Bildpunkte betragen müssen. Die Erfassung der auftretenden Abstände Lx1, Lx2 usw. in Richtung eines Aufnahmestrahls, z.B. der Abszisse x, erfolgt wie in Fig. 1 dargestellt. Das ganze Bild wird darauf erfasst durch Variation von y in geeigneten Stufen dy gemäss Fig. 3, so dass die Menge aller erfassten vorkommenden Abstände HLx (x, y) in Funktion der Abstandslängen Lx aufgetragen werden kann gemäss Figur 4. Diese zeigt die Häufigkeitsverteilung oder Histogramm aller vorkommenden Abstände Lx in x-Richtung über den aufgenommenen Bildbereich.
Analog dazu werden die Abstände Ly (x, y) in orthogonaler Richtung (d.h. in Richtung der Ordinate y) bestimmt und durch Variation von x mit den gewählten Abständen dx über den ganzen Bildbereich aufgenommen. Dies ergibt eine Häufigkeitsverteilung HLy, ebenfalls über den ganzen Bildbereich erfasst.

Zur Erfassung der Abstandslängen Lx und Ly in x-Richtung und in y-Richtung sollte das Koordinatennetz definiert orientiert sein: hier mit y-Achse entsprechend der Fingerlängsachse, um definierte Häufigkeitsverteilungen zu erhalten. Wie in Fig. 4 ersichtlich ist, sind die Histogramme HLx und HLy vollständig verschieden.

Fig. 5 zeigt eine Klasseneinteilung eines Histogramms HLx, wobei für jede Klasse Hc = 1, 2, 3 .. , z.B. die Mittelwerte Hq, Maximalwerte Hmax und Standardabweichungen oder Varianz Hvar bestimmt und als charakteristische Merkmalswerte Ci des Identifikationscodes C verwendet werden. Beispielsweise können die Histogramme HLx und HLy je in 8, 12 oder 16 Klassen eingeteilt werden und daraus für jede Klasse ein, zwei oder drei Werte (Hq, Hmax, Hvar) bestimmt werden.

Merkmal Gradienten G

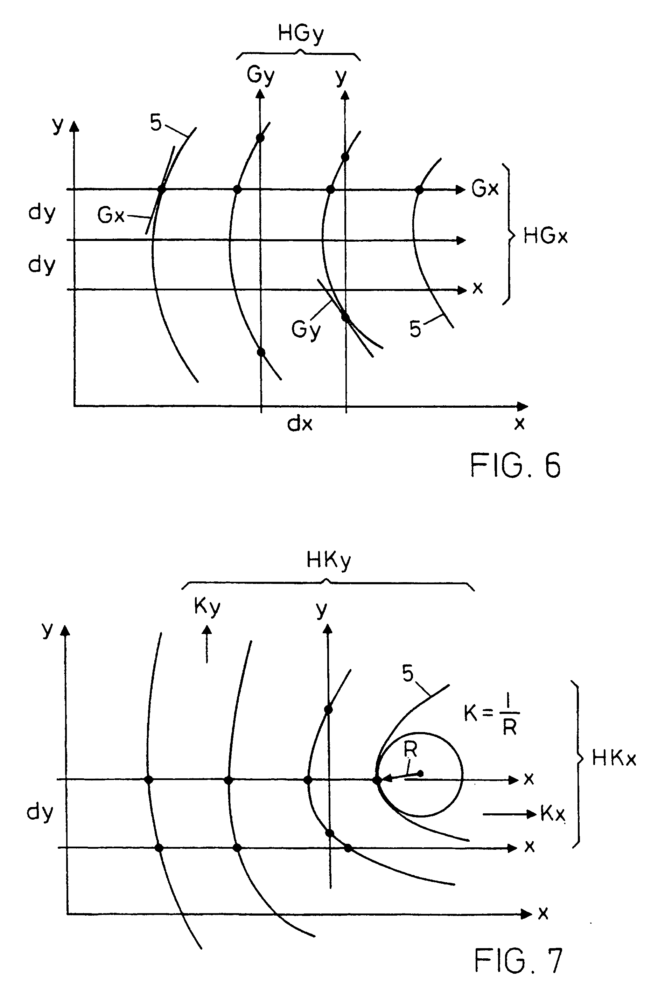

Analog zum Merkmal Abstandslängen wird auch die Häufigkeitsverteilung der Gradienten G, d.h. der ersten Richtungsableitungen über den ganzen Bildbereich gleichmässig erfasst und dazu wieder z.B. je Projektionsrichtung aufgenommen. Die Gradienten werden bestimmt als Tangente an die Hautlinie 5 im Schnittpunkt des Projektionsstrahls (z.B. in x-Richtung) mit der Hautlinie. Wie in Figur 6 dargestellt werden die Gradienten über die Projektionsrichtung erfasst und deren Häufigkeitsverteilung HGx für die Projektionsrichtung x über den ganzen Bildbereich aufgenommen und analog dazu die Häufigkeitsverteilung HGy der Gradienten in Projektionsrichtung y, um damit die Gradientenrichtungen G(x, y) über den ganzen Bildbereich gleichmässig aufzunehmen.

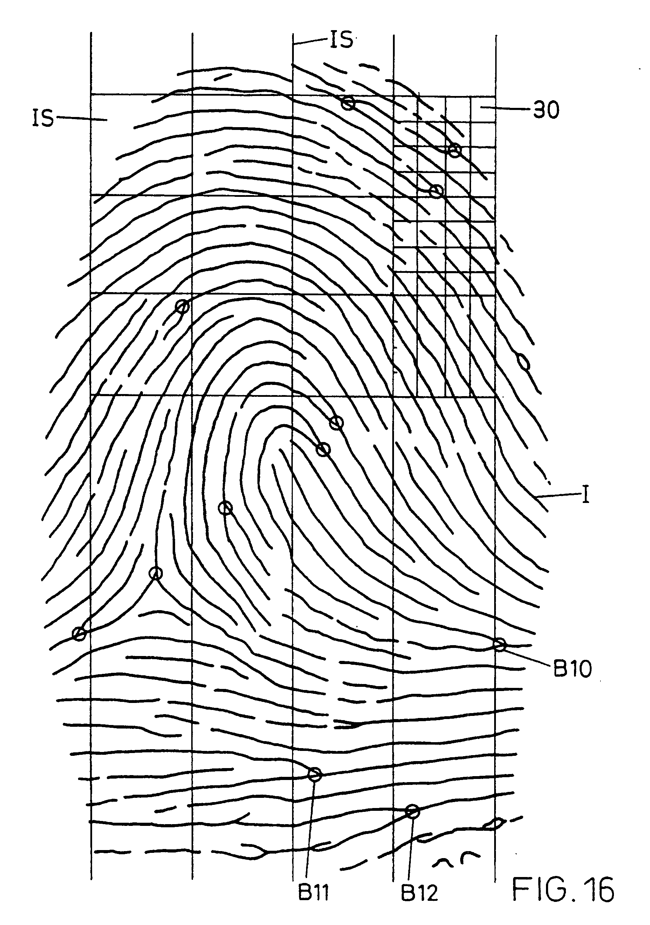

Wie später erläutert wird, kann diese Häufigkeitsverteilung von G auch bildüberdeckend aufgenommen werden, indem für jede Masche eines Netzes (30) ein Gradientenwert bestimmt wird (Fig. 16) und damit ein Gradientengitter ermittelt wird.

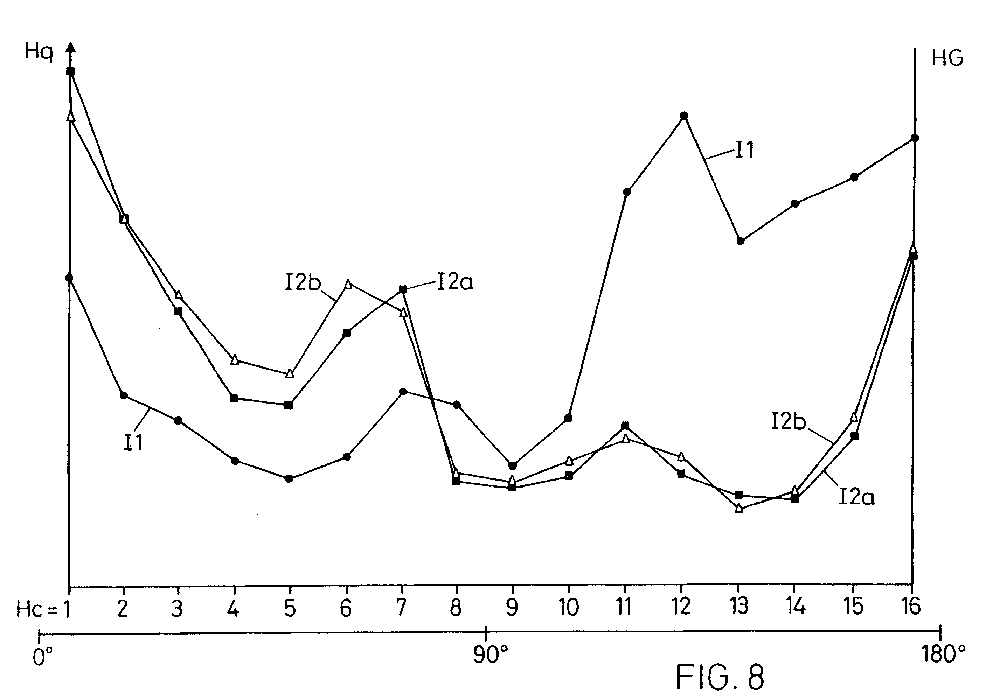

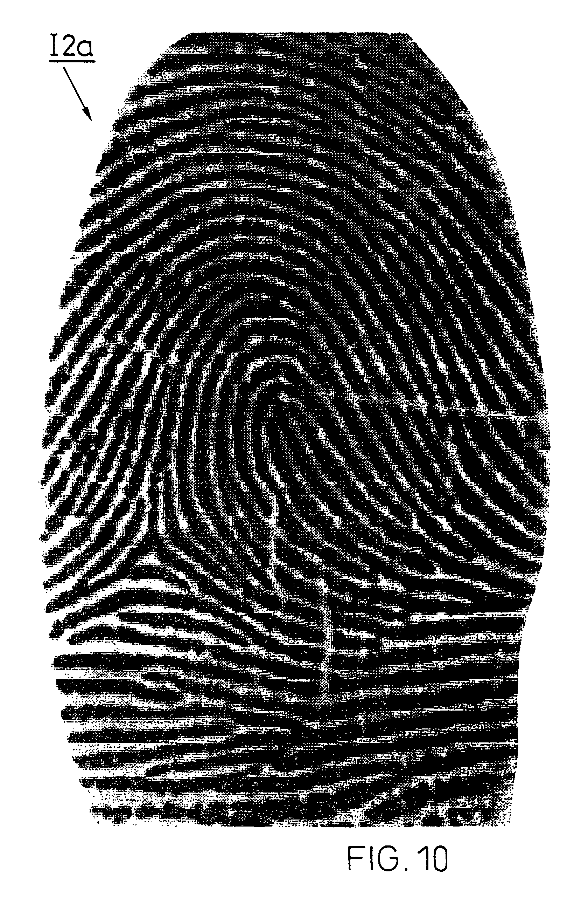

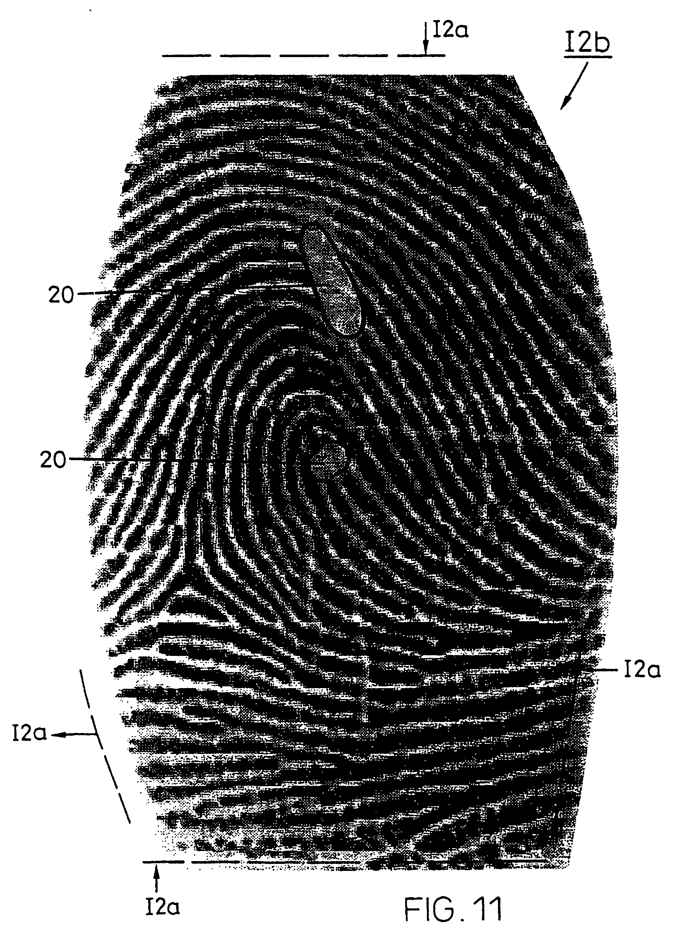

Als Illustrationsbeispiel wurden die Häufigkeitsverteilungen HG der Gradienten für die drei Fingerabdruckbilder der Fig. 9, 10 und 11 bestimmt und in Fig. 8 dargestellt. Das Bild I1 von Fig. 9 stellt den Fingerabdruck einer Person 1 dar und die Bilder I2a und I2b Fingerabdrücke einer zweiten Person, wobei Fig. 10 ein ungestörtes Fingerabdruckbild I2a zeigt und Fig. 11 den gleichen Finger der gleichen Person im Bild I2b mit Störungen bzw. Verletzungen 20, welche als weisse Flecken im Zentrum und oben in der Mitte sichtbar sind. Von diesen drei Bildern wurden die Häufigkeitsverteilungen HG über dem ganzen Bild aufgenommen und in Funktion des Gradientenwinkels von 0 bis 180° dargestellt. Daraus wurde eine Klasseneinteilung in 16 Klassen, d.h. je Klasse mit 180° : 16 = 11.25° Winkelbereich vorgenommen und die Mittelwerte Hq jeder Klasse bestimmt und in Figur 8 dargestellt. Dies ergibt für jedes Bild eine Kurve mit 16 Merkmalswerten. Wie klar ersichtlich ist, sind die Kurven dieser Bilder I2a und I2b gemäss Figuren 9 und 10 fast identisch, d.h. mit einem entsprechend definierten Schwellwert S werden beide Bilder als identisch klassiert. Eine Identifikation dieser Person 2 bleibt also dennoch möglich, obwohl sich die Bilder I2a und I2b unterscheiden, einmal durch die Verletzungsstörungen 20 und zum andern auch durch nicht identisch aufgenommene Bildbereiche. Wie in Figur 11 eingezeichnet ist, entspricht der aufgenommene Bildbereich I2a an den Rändern nicht dem Bildbereich I2b (unterschiedliche Definition des Bildbereichs).

Im Falle einer bisherigen Minutienauswertung würden im Bild I2b jedoch an den Verletzungsstellen 20 scheinbar viele neue Pseudo-Minutien (Linienenden) auftreten und damit eine Identifikation äusserst aufwendig bzw. sogar unmöglich machen. Die Kurve von Bild I1 der Person 1 von Fig. 9 unterscheidet sich dagegen sichtbar sehr stark von den Kurven I2a und I2b der Person 2. Somit ergeben die 16 Merkmalswerte Ci schon einen relativ guten Beitrag zur Erkennungssicherheit des Identifikationscodes C als Teilcode C1 des Merkmals G. Dieses Beispiel illustriert auch, dass die erfindungsgemässe Ermittlung von Häufigkeitsverteilungen der genannten Merkmale über einen grossen Bildbereich und daraus die Ermittlung von komprimierten Merkmalswerten einen Identifikationscode ergibt, welcher durch lokale Bildstörungen und Fehler relativ wenig beeinträchtigt wird, so dass damit eine entsprechend relativ höhere Erkennungssicherheit erreicht wird. Dies im Gegensatz zur bekannten Minutienauswertung.

Wie schon bei der Bestimmung der Abstände L ausgeführt, können auch die Merkmale Gradienten G direkt aus digitalen Grauwertbildern bestimmt werden, z.B. durch Bestimmung eines Gradientenwerts für jede Masche eines Maschengitters 30 und damit eines Gradientengitters wie zu Fig. 16 erläutert wird.

### Merkmal Krümmungen K

Die Krümmungen K werden nach Fig. 7 bestimmt in den Schnittpunkten der Hautlinien oder Fingerlinien 5 mit den Projektionsrichtungen x und y als zweite Richtungsableitungen der Fingerlinien. Dies wird z.B. bestimmt als inverser Radius R des Approximationskreises an die Fingerlinie 5 im betreffenden Schnittpunkt. In analoger Weise zu den bisher beschriebenen Merkmalsbestimmungen werden auch hier die Häufigkeitsverteilungen der Krümmungen über den ganzen Bildbereich in den beiden orthogonalen Richtungen x und y, d.h. HKx und HKy bestimmt (oder durch Bestimmung des K-Wertes für jede Gittermasche 30). Um nicht-relevante, sehr kleine Krümmungsradien, welche bei Unregelmässigkeiten eines skelettierten Bildes entstehen könnten, auszuschliessen, können Auswahlregeln angewendet werden, z.B. für einen minimalen Krümmungsradius Rmin wie in Fig. 15 dargestellt, z.B. Rmin = 0.3 - 0.5 mm, so dass damit wohl der engste Krümmungsradius im Zentrum des Bildes noch erfasst wird, engere Krümmungen, z. B. bei der Bifurkation B5, jedoch nicht mehr erfasst werden.

Wie schon bei der Bestimmung der Abstände L ausgeführt, können auch die Merkmale Gradienten G und allfällig auch die Krümmungen K aus digitalen Grauwerthildern oder aus binarisierten, aber noch nicht skelettierten Bildern abgeleitet werden.

Erfindungsgemäss werden nur die unabhängigen Merkmale Linienabstände L, Gradienten G, Krümmungen K und Bifurkationen B (Hautlinien-Verzweigungen) verwendet, wovon mindestens zwei dieser Merkmale zur Codebestimmung verwendet werden müssen.

Die Merkmale L, G, K sind keine Minutienmerkmale; sie werden durch ihre Häufigkeitsverteilungen charakterisiert. Auch das spezielle Merkmal Bifurkationen B wird so gewählt und einbezogen, dass Bildfehler bzw. das Fehlen einer einzelnen Bifurkation z.B. am Rand - welche einmal erfasst und einmal nicht erfasst werden kann - nicht oder nicht wesentlich ins Gewicht fällt.

Wichtig ist, dass der gesuchte kurze Identifikationscode C möglichst wenig von einzelnen Bildfehlern oder einem einzelnen Merkmal (z.B. von verschiedenartigen einzelnen Minutien) abhängig ist. Deshalb werden als einziges Minutienmerkmal nur klar definierte Bifurkationen B als Merkmal verwendet, wobei diese Bifurkationen im Gegensatz zu anderen Minutien relativ wenig empfindlich sind auf Bildfehler oder auf scheinbare Fehler infolge von Störungen der Fingerlinien z.B. durch Schnittverletzungen. Mit Schnittverletzungen können wohl neue Linienenden erzeugt werden als scheinbare Minutien, jedoch keine Verzweigungen.

Wichtig ist, dass das hier eingesetzte, ganz bestimmte Merkmal Bifurkationen B anders verwendet wird, als in der herkömmlichen Minutienauswertung. Dort werden verschiedene Minutienarten erfasst und von jeder Minutie deren Lage, deren Art und deren Ausrichtung bestimmt, wobei zur Auswertung und Codebestimmung die Relativpositionen dieser verschiedenen einzelnen Minutien herangezogen werden. Erfindungsgemäss wird hier jedoch nur eine Art von Minutien ausgewählt nämlich klar definierte Bifurkationen, welche zudem in vollständig anderer Weise verwendet werden als bisher, wie im weiteren ausgeführt wird: als Häufigkeitsverteilung oder als einzelne selektierte Bifurkationen.

Merkmal Bifurkationen B

Die Figur 12 zeigt eine binarisierte und skelettierte Darstellung des Grauwertbildes von Fig. 10, welche als Beispiel zur Bestimmung von Bifurkationen verwendet wird. In diesem Bild werden die Bifurkationen Bi = B1 - B12 bestimmt, dies ergibt eine Anzahl N = 12 von Bifurkationen B. Dazu werden geeignete Auswahlregeln bzw. Definitionskriterien aufgestellt, so dass kleine Störungen oder andere Arten von Minutien (z.B. Inseln) nicht als scheinbare Bifurkationen gezählt werden. Als Regel dienen z.B. folgende Vorschriften:

Eine registrierte Bi-furkation muss eine Mindestlänge von 0.5 - 1 mm aller drei Äste aufweisen und ein Ast muss mindestens 1 - 1.5 mm lang sein. Überdies kann auch ein Minimalabstand zwischen zwei Bifurkationen von z.B. 0.7 - 1 mm vorgeschrieben werden. Gemäss solchen Definitionskriterien werden z.B. (B13), (B14) in Fig. 12 und (B7), (B8), (B9) in Fig. 15 nicht als Bifurkationen gezählt.

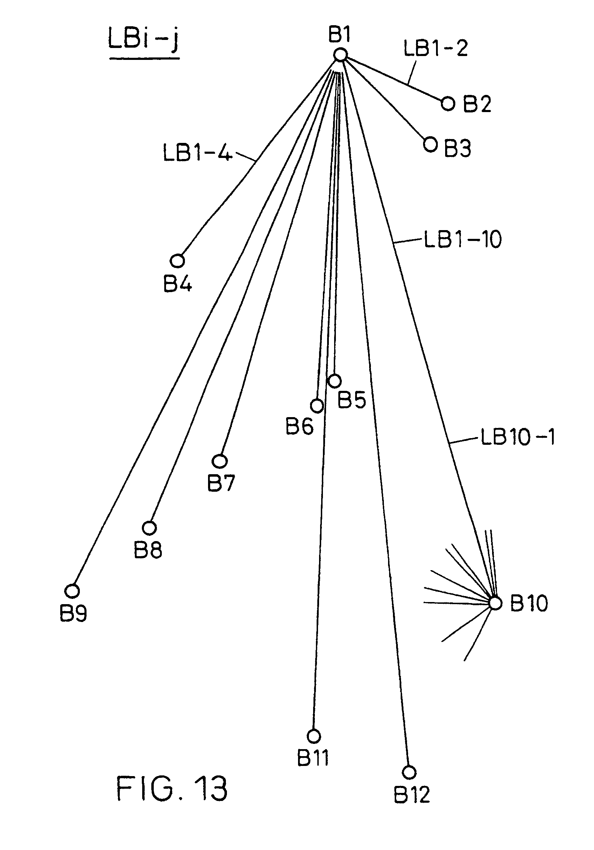

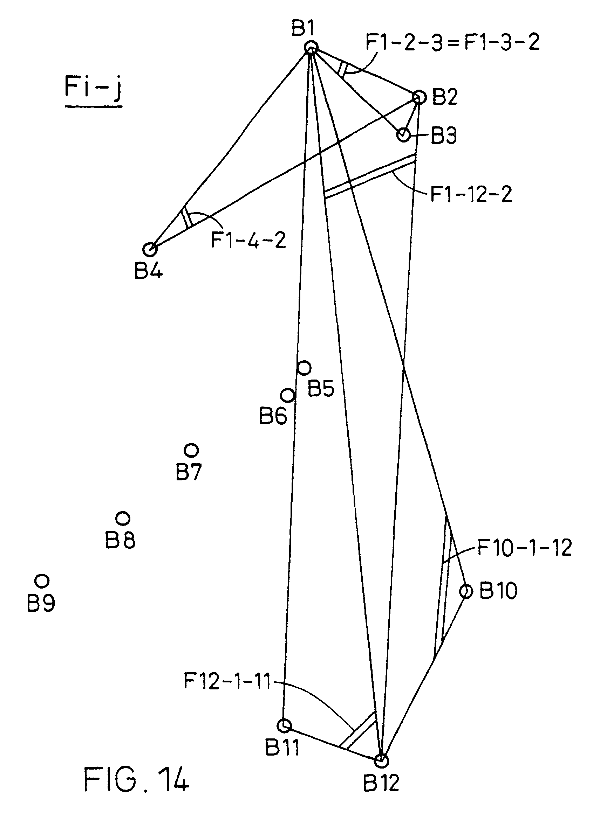

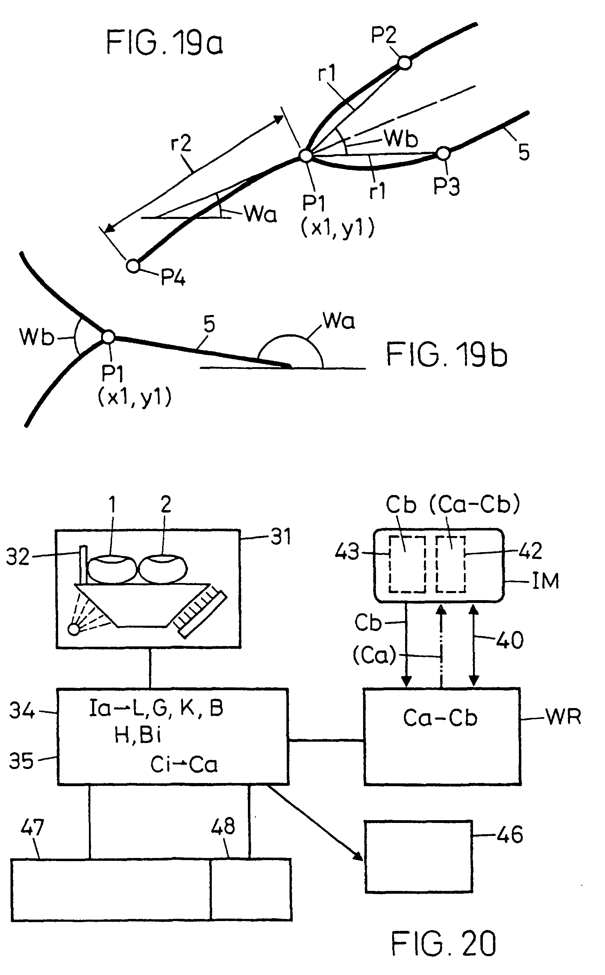

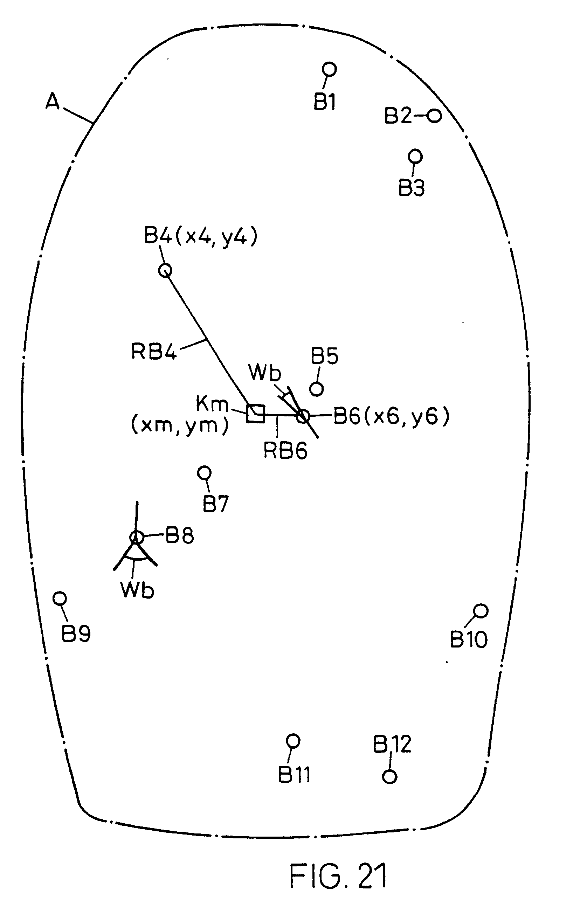

Bifurkatiionen B können als definierte einzelne und selektierte Bifurkationen zur Codegenerierung verwendet werden, wie zu Fig. 19 und 21 erklärt wird, oder es können gemäss Fig. 13, 14 Häufigkeitsverteilungen z.B. von Bifurkationsabstände LB sowie von nächstliegenden Dreiecksflächen F zwischen den Bifurkationen bestimmt werden.
Gemäss Fig. 13 werden die Bifurkationsabstände LB folgendermassen bestimmt:

Von jeder der N Bifurkationen Bi wird der Abstand LBi-j zu jeder andern Bifurkation Bj bestimmt. Dies ergibt N(N-1) Bifurkationsabstände LBi-j. Im Beispiel mit N = 12 ergibt dies somit 132 Abstände, welche in einem Histogramm erfasst werden: als Häufigkeitsverteilung HLB in Funktion des Abstands LB.

Analog dazu werden Dreiecksflächen Fi-j zwischen den Bifurkationen Bi und Bj bestimmt gemäss Fig. 14. Von jeder Bifurkation Bi ausgehend, wird zu jeder anderen Bifurkation Bj eine erste Dreiecksseite definiert, wobei als dritter Dreieckspunkt die der ersten Bifurkation Bi am nächsten liegende Bifurkation Bk (mit k nicht = j) bestimmt wird, z.B. von B1 ausgehend, die Fläche F1-2-3 (mit i = 1, j = 2, k = 3) und F1-3-2 (mit i = 1, j = 3, k = 2) sowie F1-4-2 bis F1-12-2. Mit der Auswahlregel wird sichergestellt, dass je nur eine Fläche erfasst wird, z.B. falls zwei nächstliegende Bifurkationen Bk vorliegen, dass dann nur die der Bj am nächsten liegende Bifurkation als Bk verwendet wird. Von B10 ausgehend nach B1 ergibt dies die Fläche F10-1-12 (i = 10, j = 1, k = 12), d.h. von jedem Bj als Basislinie ausgehend ergibt dies genau ein Dreieck, somit insgesamt wiederum N(N-1) = 132 Flächen Fi-j, welche wiederum ein Histogramm bilden als Häufigkeitsverteilung in Funktion der Fläche F.
Fig. 15 zeigt ein weiteres Beispiel zur Bestimmung von Bifurkationen aus einem anderen Fingerabdruckbild, wobei durch entsprechende Auswahlregeln z.B. die sehr nahe beieinanderliegenden Bifurkationen B7, B8, B9 nicht als Bifurkationen zur Auswertung gezählt werden, so dass hier nur noch die Bifurkationen B1 bis B6 übrig bleiben und damit die Anzahl der Birfukationsabstände LB sowie der nächstliegenden Dreiecksflächen F je N(N-1) = 30 beträgt. Mit anderen Definitionskriterien könnte z.B. auch nur B9 als Bifurkation definiert werden und B7 und B8 nicht.

Bestimmung von Merkmalswerten

Aus den Histogrammen werden einfache Merkmalswerte Ci, welche das Histogramm charakterisieren, ermittelt, z.B. Mittelwerte Hq, Maximalwerte Hmax und Varianz Hvar.
Weiter kann eine Häufigkeitsverteilung auch in Klassen Hc eingeteilt werden und z.B. als charakteristische Werte, Mittelwert und Varianz für jede Klasse, bestimmt werden (Fig. 5).

Selektierte Bifurkationsmerkmale

Das Merkmal Bifurkationen B kann zusätzlich auch nicht-statistisch eingesetzt werden, indem einzelne klar definierte Bifurkationen mit bestimmen Bifurkationsmerkmalen zur Ermittlung von Codemerkmalen Ci und damit des Identifikationscodes C verwendet werden. Dabei werden von Bifurkationen, wie in den Beispielen von Fig. 19a und b illustriert wird, deren Lage, d.h. die Ortskoordinaten x1, y1 des Punktes P1 bestimmt sowie der Orientierungswinkel Wa und der Öffnungswinkel Wb. Ein klar definierter Öffnungswinkel Wb kann beispielsweise dadurch bestimmt werden, dass er als Winkel zwischen den Verbindungsgeraden der Punkte P1, P2 und P1, P3 definiert wird, wobei die Punkte P2 und P3 in einem geeigneten Abstand r1 vom Punkt P1 gewählt werden, z.B. r1 = 0.5 - 1 mm. Ein Punkt P4 mit einem minimalen Abstand r2 von z.B. 1 - 1.5 mm vom Punkt P1, bildet anderseits ein Definitionskriterium für eine Bifurkation, damit nicht kleine Bildstörungen fälschlicherweise auch als Bifurkationen gezählt werden. Im Beispiel von Fig. 19a ist ein relativ kleiner Bifurkationswinkel Wb gezeigt, z.B. entsprechend der Bifurkation B6 in Fig. 21, während das Beispiel von Fig. 19b einen grossen Öffnungswinkel Wb illustriert, beispielsweise wie bei der Bifurkation B8 von Fig. 21. Identifizierte Bifurkationen können nun klassifiziert zur Code-Bildung beigezogen werden, d.h. es werden Sortierkriterien, beispielsweise eine Gewichtung für die Bifurkationen eingeführt. Ein erstes Klassifikationskriterium besteht im Öffnungswinkel Wb, wobei grosse Öffnungswinkel eine höhere Gewichtung erhalten. Das Klassifikationskriterium kann z.B. sein: Gewichtung proportional zum Öffungswinkel Wb. Ein weiteres Sortierkriterium besteht im Abstand RBi der Bifurkationen zu einem zentralen Bezugspunkt, hier z.B. als Abstand RBi zum Krümmungsmittelpunkt Km (Fig. 21), wobei die zentralen Bifurkationen stärker gewichtet werden als die weiter entfernten. Als weiteres Selektionskriterium können auch randnahe Bifurkationen, z.B. B2 in Fig. 21, welche nahe an der Aussenkontur A des Fingerbildes liegt, weggelassen werden. Aus den Bifurkationsmerkmalen und den Klassifikationskriterien kann z.B. eine Bifurkationspriorität definiert werden als BP = Wb/RB. Damit können alle Bifurkationen in absteigender Folge nach BP sortiert werden. Zur Generierung einer kurzen Codelänge können in nach Bifurkations-Priorität sortierte Rangreihenfolge die jeweils ersten Einträge verwendet werden. Eine Reihenfolge kann für Fig. 21 z.B. folgende sein: B8, B6, B5, B7, B4.

Durch Kombination der Merkmale Gradienten und Bifurkationen können besonders konzentrierte Codes mit relativ hoher Erkennungssicherheit gebildet werden. Besonders vorteilhaft ist dabei ein Identifikationscode C, welcher aus Gradientenmerkmalen für jedes Segment IS eines Gradientengitters einerseits und aus klassifizierten Bifurkationen B andererseits gebildet wird. Dazu ist ein zentraler Bezugspunkt und die Orientierung des Fingerlinien-Bildes erforderlich.

Bildvorverarbeitung und Erfassungsarten

Die Merkmale L und G können direkt aus dem digitalen Grauwertbild ohne weitere Bildvorverarbeitung bestimmt werden.
Die Bestimmung der Merkmale B und auch von K erfolgt meist mit einer Linienverdünnung als Bildvorverarbeitung, z. B. einer Binarisierung und Skelettierung. Dann werden auch die anderen Merkmale L, G, K aus diesem skelettierten Bild bestimmt.
In einer vorteilhaften Variante können aber Bifurkationen B mittels neuronaler Netze auch direkt aus dem digitalen Grauwertbild bestimmt werden.

Die Merkmale können auf folgende Arten erfasst werden, wie in Fig. 16 mit Segment- und Mascheneinteilung illustriert wird:

a    im ganzen Bildbereich (für alle Merkmale L, G, K, B)

b    je in relativ wenigen grossen Segmenten, z.B. eingeteilt in 3 x 5 bis 5 x 7 Segmente IS, wobei Häufigkeitsverteilungen für jedes Segment IS ermittelt und daraus Merkmalswerte Ci abgeleitet werden.

c    Überdeckung des Bildes I mit einem Maschengitter 30, wobei für jede Masche nur ein Wert des Merkmals bestimmt wird. Die Maschengrösse wird dabei geeignet gewählt. (z.B. 5 x 5 Pixel gross).

Mit diesen Erfassungsarten a, b, c werden die folgenden Merkmale erfasst:

| a | b | c |
|---|---|---|
| Merkmale | | |
| L | - | - |
| G | G | G |
| K | K | K |
| B | - | (B) |

Beim Codevergleich ist zu beachten, dass die Segmenteinteilung IS von Translation und Rotation abhängig ist. Die Merkmale sind ebenfalls unterschiedlich abhängig von Translation und Rotation der aufgenommenen Bilder. Zum Codevergleich ist dies zu berücksichtigen.

Rotationsunabhängig sind die Merkmale Krümmungen K sowie die aus den Bifurkationen B abgeleitete Bifurkationslängen BL und Bifurkationsflächen F und die relative Lage selektierter Bifurkationen. Das Merkmal Gradienten G erfordert die Bestimmung der Bild-Ausrichtungsachse y. Das Merkmal Gradienten G ist dagegen von Bilddilatationen (Vergösserung oder Verkleinerung des Bildes) unabhängig.

Da mindestens zwei Merkmale (L, G, K, B) als Teilcode (C1, C2) im Identifikationscode C = (C1, C2) enthalten sind, können diese Teilcodes (C1, C2) beim Codevergleich auch entsprechend unterschiedlich verwendet werden, d. h. entsprechend der Abhängigkeit von der Bilddefinition und der Abhängigkeiten des betreffenden Merkmals und der betreffenden Histogrammauswertung bzw. der selektierten Bifurkationsmerkmale.
Teilcodes können beliebig aus Merkmalswerten Ci gebildet werden.

Bildausschnitt

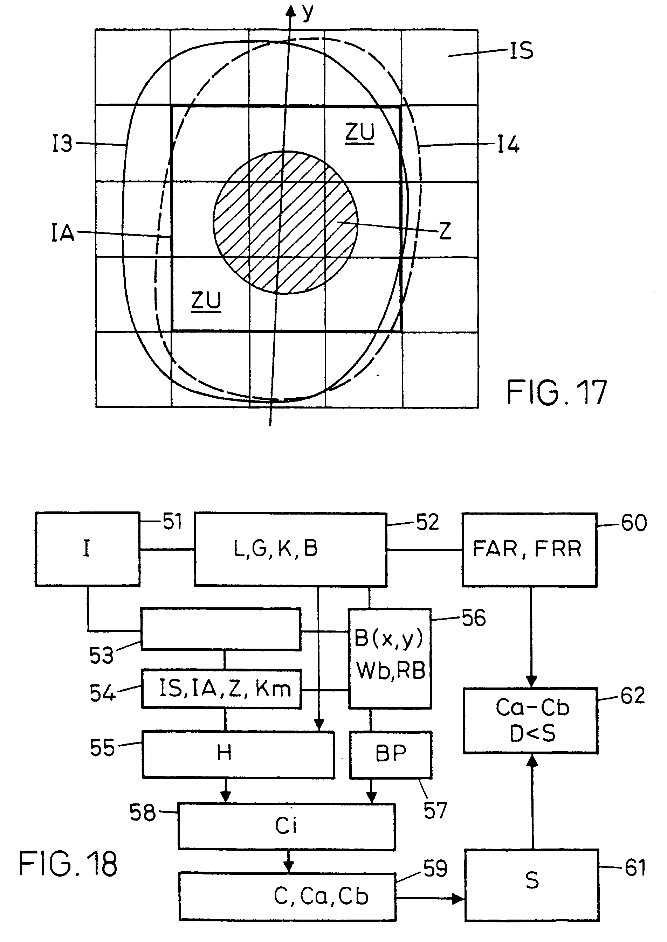

Fig. 17 illustriert die Abhängigkeit von der Bilddefinition, wobei hier vom gleichen Finger einmal das Bild I3 und ein anderes Mal das Bild I4 aufgenommen wurde, wobei diese Bilder I3, I4 unterschiedliche Bereiche und allfällig auch unterschiedliche Orientierungen der Längsachse y des Fingerabdrucks zeigen. Um immer gleiche Bildbereiche vergleichen zu können, kann aus einem gegebenen Fingerabdruck auch ein zentraler Teil ausgeschnitten werden und als Bildausschnitt IA zur Merkmalserfassung und Codegenerierung verwendet werden. Dabei gilt, dass vorzugsweise Bereiche im Zentrum Z eines Fingerabdrucks und in dessen Umgebung ZU zur Merkmalserfassung und Codegenerierung in erster Linie heranzuziehen sind, da hier auch der Informationsgehalt höher ist als in den Randbereichen.

Bei gut definierter Lage und Ausrichtung der Bilder, mittels entsprechender Bildaufnahmevorrichtungen, z.B. Zweifingerführung, sind auch segmentierte Bilder sicherer vergleichbar.

Orientierung und zentraler Bezugspunkt

Zur Bestimmung der Orientierung und eines zentralen Bezugspunktes eines Fingerlinienbildes bzw. zur Definition eines Koordinatensystems mit einem Koordinaten-Nullpunkt kann bekanntermassen z.B. ein sogenannter "Core Point" bestimmt werden. Dies ist jedoch sehr aufwendig und oft ist auch kein eindeutiger Core Point bestimmbar. Eine einfachere Methode besteht nun darin, aus den Merkmalen Krümmungen K einen Krümmungsradien-Schwerpunkt Km als zentralen Bezugspunkt zu bestimmen. Dazu werden die Mittelpunkte der Approximationskreise (siehe R in Fig. 7) an die Krümmungen bestimmt und aus diesen gleichmässig aufgenommenen Kreismittelpunkten der Approximationskreise deren Schwerpunkt Km mit Koordinaten xm, ym bestimmt. Ein zentraler Bezugspunkt kann aber zuerst auch approximativ z.B. als Schwerpunkt der Bildfläche mit Aussenkontur A (in Fig. 21) bestimmt werden. Ebenso kann die definiert geführte Aufnahme eines Fingerbildes mittels Führungsmitteln 32, wie zu Fig. 20 beschrieben, eingesetzt werden. Eine weitere Möglichkeit besteht darin, einen zentrale Bezugspunkt aus der Varianz Hvar der Gradientenverteilung in Bildsegmenten IS zu bestimmen, wobei der zentrale Bezugspunkt durch dasjenige Segment bestimmt wird, welches ein Maximum der Varianz aufweist. Dazu kann die Bildsegmentierung auch variiert werden.

Bei schlecht definierter Lage eines aufzunehmenden Bildes müssen Merkmale, Bestimmungsarten und Codeermittlung so gewählt werden, dass sie relativ lageunabhängig sind, z.B. die Merkmale G, K nach Erfassungsart a, wobei jedoch in den meisten Fällen die Richtung hilfsweise bestimmt werden sollte. Zum Codevergleich kann das Bild auch über einen kleinen Winkelbereich gedreht werden, bzw. in x- und y-Richtung geschoben werden.

Als Ausführungsvarianten des erfindungsgemässen Verfahrens können je nach Bilddefinition und Aufgabenstellung z.B. folgende Kombinationen der Merkmale zur Bestimmung eines Identifikationscodes C verwendet werden:

1. Merkmale Linienabstände L, Gradienten G und Bifurkationen B. Diese können z.B. auch aus Grauwertbildern bestimmt werden und speziell für einfachere, kürzere Codes angewendet werden (L und G), z.B. auch mit einer Klasseneinteilung von Häufigkeitsverteilungen.
Aus skelettierten Bildern können folgende Merkmale verwendet werden:
2. die Merkmale Gradienten G und Krümmungen K
3. die Merkmale Gradienten G und Bifurkationen B
4. die Merkmale Krümmungen K und Bifurkationen B, welche beide rotationsinvariant sind.
5. die Merkmale Gradienten G, Krümmungen K und Bifurkationen B, dies speziell für höhere Genauigkeiten, wobei den höheren Genauigkeiten entsprechend längere Codes gebildet werden (auch mit selektierten Bifurkationen).

Nach geeigneter Wahl der kombinierten Merkmale kann auch die Genauigkeit, mit welcher die Merkmale und deren Häufigkeitsverteilungen bestimmt werden, sowie daraus die Bestimmung der Merkmalswerte Ci, so gewählt werden, dass letztlich ein Identifikationscode C mit einer Codelänge entsteht, welcher den gewünschten Genauigkeitsanforderungen entspricht; d.h. die Codelänge kann so weit aufgefüllt werden, wie gewünscht wird, z.B. durch engere Segmentierung und Klasseneinteilung und durch Bestimmung von mehr Merkmalswerten Ci daraus.

Der Identifikationscode C kann nicht nur sequentiell sondern auch iterativ ermittelt werden.

Code-Vergleich

Mit diesen erfindungsgemässen, relativ kompakten Identifikationscodes C (mit geringem Speicherbedarf) können auf einfachste Art alle an sich bekannten Identifikations-, Verifikations- und Authentifikationsaufgaben auch dezentral einfach und rationell ausgeführt werden. Dabei wird zum Vergleich zweier Codes Ca und Cb, z.B. eines Codes eines aktuellen Fingerabdruckbildes Ca mit einem Vergleichsmuster Cb aus einem zugeordneten Speicher (welcher eine Datenbank oder auch ein Identifikationsmedium IM sein kann) mittels mathematischer Verfahren ein Abweichungswert D = Ca - Cb bestimmt und mit einem vorgebbaren Schwellwert (einer Akzeptanzschwelle) S verglichen. Falls D < S ist, gelten die beiden Codes Ca und Cb, und dementsprechend die zugehörigen Personen, als identisch.

Dabei können individuelle, personenspezifische Schwellwerte S vorgegeben werden. Beispielsweise abhängig davon, wie gut ein Identifikationscode C von einer bestimmten Person zu ermitteln ist und andererseits auch davon, wie wichtig diese Identifikationsaufgabe für diese Person ist.

Ebenso kann ein anwendungsspezifischer Schwellwert S vorgegeben werden, entsprechend der betreffenden Anwendung, d.h. je nachdem welche Erkennungssicherheit gewünscht ist, d.h. welche FAR False Acceptance Rate und welche FRR False Rejection Rate zulässig ist.

Zur Bestimmung dieser Übereinstimmung kann beispielsweise der Euklidische Abstand D der Merkmalsvektoren C bei vorgegebener Übereinstimmungsschwelle S bestimmt werden. Dies ergibt für einen Code, gebildet aus den Merkmalswerten Ci, dass ein Fingerabdruck 1 identisch ist mit einem Fingerabdruck 2, wenn gilt:

$$D = \Sigma \ (C1i - C2i)^2 < S$$

Alternativ können die Identifikationscodes auch nach folgendem Verfahren korreliert werden:
Es wird eine Korrelation Kor zwischen den Merkmalen eines Fingers ai mit i = 1, N und eines zweiten Fingers bi mit i = 1, N nach der Formel:

$$-1 \leq Kor = \Sigma \ (ai-aq)(bi-bq) \ / \ (\Sigma \ (ai-aq)^2 \ (bi-bq)^2 \ )^{1/2} \leq + 1 \ \text{für i= 1,N}$$

gebildet, wobei aq der Mittelwert der Werte ai und bq der Mittelwert der Werte bi ist.
Für ai = bi sind die Finger identisch, d.h. die Korrelation ist 1. Bei Kor = 0 sind die Merkmale nicht korreliert, bei Kor = -1 sind sie antikorreliert.

Als weitere Vergleichsmethoden können je nach Art des Codes C auch Regressionsanalysen oder Momentenanalysen eingesetzt werden. Überdies können die verschiedenen Merkmale, bzw. Mermalswerte Ci und entsprechende Teilcodes C1, C2 eines Identifikationscodes C = (C1, C2) auch unterschiedlich behandelt werden.

Fig. 18 illustriert schematisch das erfindungsgemässe Verfahren zur Bestimmung eines relativ kurzen Identifikationscodes C. Die Wahl 52 von mindestens zweien der orthogonalen Merkmale L, G, K, B wie auch die Wahl der folgenden Verfahrensschritte wird einerseits auf die Bilddefinition 51 und anderseits auf die Aufgabe 60 abgestellt, d. h. auf die erforderliche Erkennungssicherheit der gewünschten Anwendungen, daraus folgen die Anforderungen an die False Acceptance Rate FAR und die False Rejection Rate FRR. Je nach Bilddefinition 51 (d.h. Güte von Ausrichtung, Ausschnitt, Bildaufnahme und Bildqualität) werden entsprechend unempfindlichere Merkmale und Erfassungsarten gewählt. Ebenso kann eine allfällige Bildvorverarbeitung 53 erfolgen zur Merkmalsbestimmung direkt aus dem Grauwertbild, aus einem binarisierten Bild oder aus einem verdünnten, skelettierten Linienbild. In einer nächsten Stufe 54 kann eine allfällige Bildausrichtung, ein zentraler Bezugspunkt bzw. ein Koordinaten-Nullpunkt, z.B. Km, sowie die Wahl eines Bildausschnittes IA oder einer Segmentierung IS erfolgen. Daraus werden Histogramme H mit entsprechend feiner Rasterung bzw. Menge der Daten ermittelt. Zusätzlich zu den Histogrammen können in Stufe 56 einzelne definierte Merkmale Bifurkationen B mit Lage, Orientierungswinkel Wa und Öffnungswinkel Wb bestimmt werden und in Stufe 57 eine Klassifizierung der Bifurkationen, eine Selektierung bzw. Gewichtung nach einer Bifurkationspriorität BP durchgeführt werden. In Stufe 58 erfolgt die Bestimmung der Merkmalswerte Ci und in Stufe 59 die Zusammensetzung des Identifikationscodes C. D.h. es wird eine entsprechende grössere oder kleinere Codelänge zusammengestellt, bis die gewünschte Erkennungssicherheit FAR und FRR gemäss Stufe 60 erreicht ist. Der Zusammensetzung des Codes C entsprechend, können in einem Schritt 61 die Vergleichsmethoden und die Schwellwerte S zum Identifikationsvergleich gewählt werden. Der Identifikationsvergleich Ca - Cb = D < S wird in Stufe 62 durchgeführt. Damit ist das erfindungsgemässe Verfahren universell für einen weiten Bereich von Anwendungen einsetzbar und auch optimal auf die gewünschten Aufgaben abstimmbar bezüglich Berechnungsaufwand und Codelänge.

Fig. 20 zeigt eine Vorrichtung zur Ausführung des Verfahrens mit einem elektronischen Bildaufnahmegerät 31 und einer Station mit einer Auswertungselektronik 34 und mit Auswertungsalgorithmen 35 zur Bestimmung von Merkmalswerten Ci und daraus des Identifikationscodes C bzw. Ca, d.h. des aktuellen Identifikationscodes entsprechend der Bildaufnahme von aufzunehmenden Fingern 1, 2 und zur Durchführung eines Codevergleichs Ca - Cb zwischen einem gespeicherten Vergleichscode Cb sowie dem aktuellen Code Ca. Dieser Codevergleich kann auch in einer zugeordneten Lesestation WR erfolgen. Entsprechend dem Codevergleich, d.h. der Verifikation der aktuellen Person können Zulassungsfunktionen 46 zur Steuerung von zugeordneten Funktionsstationen ausgeübt werden. Das Bildaufnahmegerät 31 weist hier Führungs- und Ausrichtungsmittel 32 auf mit Anschlägen zur Ausrichtung und Positionierung von einem oder auch von zwei nebeneinanderliegenden Aufnahme-Fingern 1, 2. Dazu kann ein seitlicher Anschlag zur Ausrichtung der Finger-Längsachse und ein vorderer Anschlag zur Positionierung des Fingerbildes und damit zur Bestimmung eines zentralen Bezugspunktes bzw. eines Zentrums des Fingerlinienbildes vorgesehen sein. Eine solche Zweifinger-Aufnahme-Vorrichtung ist z.B. in der PCT CH97/00241 = WO 98/09246 offenbart. Mit einer erfindungsgemässen Vorrichtung kann ein Codevergleich Ca - Cb dezentral erfolgen, so dass keine zentrale Datenbank mit Vergleichscodes Cb vorhanden sein muss. Die erfindungsgemässe Vorrichtung kann auch zugeordnete Identifikationsmedien IM für berechtigte Personen aufweisen, wobei der Vergleichscode Cb der Person und weitere Informationen im Identifikationsmedium IM bzw. in dessen Speicher 43 enthalten sind und wobei eine codierte Kommunikation 40 mit einer zugeordneten Lesestation WR ausgeführt werden kann. Dabei ist der Vergleichscode Cb der berechtigten Person nur auf dem Identifikationsmedium gespeichert und nicht in der Überprüfungsstation bzw. in einer Datenbank. Dies ermöglicht einen besseren Datenschutz.

Als weitere Variante kann ein Codevergleich Ca - Cb, d.h. des aktuellen Code Ca mit dem Vergleichscode Cb der Person mittels des Prozessors 41 auch im Identifikationsmedium IM selber ausgeführt werden. Dann muss nur der aktuelle Code Ca von der Lesestation WR an das Identifikationsmedium übertragen werden, während vom Identifikationsmedium kein Code übermittelt werden muss. Die Vorrichtung kann in einer weiteren Variante auch mit einem übergeordneten System 47 mit einem Leit-Rechner und mit einer Datenbank 48 für Vergleichscodes Cb verbunden sein. Das Identifikationsmedium IM kann Zulassungs- und Funktionsberechtigungen für weitere zugeordnete Funktionsstationen 46 einer Anlage enthalten.

Vorselektierte Datenbanksuche

In Anwendungen, bei denen eine schnelle Datenbanksuche erforderlich ist, beispielsweise zur positiven Identifikation einer einzelnen Person aus einer Einwohnerdatenbank mit einer grossen Menge von Vergleichscodes Cb allein anhand biometrischer Erkennungsmerkmale, kann die Identifikation stufenweise erfolgen. Dabei erfolgt der Vergleich nicht mit dem ganzen biometrischen Identifikationscode Ca, sondern nur mit Teilcodes bzw. mit einzelnen Merkmalswerten Ci, so dass die Suche wesentlich rascher erfolgen kann. In einem ersten Schritt wird beispielsweise nur ein Teilcode C1 verglichen und die verbleibende reduzierte Menge dann in einem zweiten Schritt mit einem zweiten Teilcode C2 verglichen usw. Bis zum vollständigen Codevergleich mit einer verbliebenen sehr kleinen Restmenge aus der Datenbank. Dies ergibt eine wesentlich raschere Suche als nach dem vollen Identifikationscode C. Mit Vorteil wird diese Suche nach primären biometrischen Daten klassiert, d.h. beispielsweise können Gradienten und selektierte Bifurkationsmerkmale stufenweise dazu eingesetzt werden. Eine weitere Methode besteht in der Bildung von Gradientensegmenten nach der Methode der Quadranten-Unterteilung ("Quad trees"). Dabei wird das Bild in vier Quadranten unterteilt, von denen je ein Gradientenhistogramm gebildet wird. Als nächster Schritt wird jeder Quadrant wieder in vier Quadranten geteilt usw. bis schliesslich das Gradientenhistogramm zur Hauptlinientangente im betrachteten Segment konvergieren würde.

Es werden folgende Bezeichnungen verwendet in der Beschreibung und in den Figuren:

| | |
|---|---|
| L | Linienabstände |
| G | Gradienten |
| K | Krümmungen |
| B | Bifurkationen (Verzweigungen) |
| LB | Bifurkationsabstände |
| F | Bifurkationsflächen |
| H | Häufigkeitsverteilungen, Histogramme H(L), H(G), H(K), H(B: LB, F) |
| Hc | Klasseneinteilung von H |
| Hq | Mittelwerte |
| Hmax | Maximalwerte |
| Hvar | Varianz von H |
| De | Grauwert |
| I1, I2 | Fingerabdruckbilder |

| | |
|---|---|
| IA | Bildausschnitt |
| IS | Bildsegmente |
| C | Identifikationscode (Merkmalsvektor Ci) |
| Ca | aktueller Code |
| Cb | Vergleichscode |
| C1, C2 | Teilcodes |
| Ci | Merkmalswerte |
| D | Abweichungswert ("Code Abstand") |
| S | Schwellwert, Akzeptanzschwelle |
| Z | Zentrum |
| ZU | Umgebung |
| R | Radius von K |
| x | Abszisse |
| y | Ordinate, Fingerlängsachse |
| dx, dy | Rasterung |
| FAR | False Acceptance Rate |
| FRR | False Rejection Rate |
| IM | Identifikationsmedium, Datenträger |
| WR | Lesestation |
| BP | Bifurkations-Priorität |
| P1 - P4 | Definition von Wb |
| r1, r2 | Abstände |
| Wa | Orientierungswinkel |
| Wb | Öffnungswinkel von B |
| P1(x1,y1) | Ortskoordinaten von B |
| Km | Krümmungsradien-Schwerpunkt |
| xm, ym | Koordinaten von Km |
| RBi | Abstand vom zentralen Bezugspunkt zu Bi |
| A | Aussenkontur von Fingerbild I |

| | |
|---|---|
| 1, 2 | Finger |
| 5 | Fingerlinien, Hautlinien |
| 10 | Grau-Schwellwert |
| 20 | Bildstörung, Verletzung |
| 30 | Maschengitter |
| 31 | Bildaufnahmegerät |
| 32 | Führungs- und Ausrichtungsmittel |
| 34 | Auswertungselektronik, -Station |
| 35 | Auswertungsalgorithmen |
| 40 | codierte Kommunikation |
| 42 | Prozessor |
| 43 | Speicher |
| 46 | Zulassungsfunktionen (Funktionsstationen) |
| 47 | übergeordnetes System, Leitrechner |
| 48 | Datenbank |
| 51 | Bilddefinition |
| 52 | Wahl der Merkmale L, G, K, B |
| 53 | Bildvorverarbeitung, Skelettierung |
| 54 | Bildausschnitt, Segmentierung |
| 55 | Histogramme bilden |
| 56 | Bifurkationen bestimmen |
| 57 | Klassifizierung, Auswahl von B |
| 58 | Merkmalswerte Ci bestimmen |
| 59 | Identifikationscode C bestimmen |
| 60 | Anwendungen, Anforderungen (FAR, FRR) |
| 61 | Vergleichsmethode, Schwellwert S wählen |
| 62 | Identifikationsvergleich Ca - Cb |

**Patentansprüche**

1. Verfahren zur Ermittlung eines Identifikationscodes aus Fingerabdruckbildern bzw. aus digitalen Grauwertbildern, wobei mindestens zwei der folgenden unabhängigen Merkmale: Linienabstände L, Gradienten G, Krümmungen K und Bifurkationen B erfasst werden, aus denen Merkmalswerte bestimmt werden, **dadurch gekennzeichnet, dass**
mindestens zwei der drei Merkmale Gradienten G, Krümmungen K und Bifürkationen B ausgewählt und daraus je komprimierte Merkmalswerte Ci gebildet werden,
wobei mindestens eines der Merkmale Gradienten G oder Krümmungen K ausgewählt wird und davon Häufigkeitsverteilungen HG oder HK bestimmt werden,
dass aus den Häufigkeitsverteilungen charakteristische Werte (z.B. Mittelwert, Varianz, Maximum) als komprimierte Merkmalswerte Ci bestimmt werden und wobei alle komprimierten Merkmalswerte Ci der ausgewählten Merkmale als Vektorkomponenten zusammen den Identifikationscode C bilden.

2. Verfahren nach Anspruch 1, **dadurch gekennzeichnet, dass**
Häufigkeitsverteilungen HG, HK von beiden unabhängigen Merkmalen Gradienten G und Krümmungen K bestimmt werden.

3. Verfahren nach Anspruch 1 oder 2, **dadurch gekennzeichnet, dass** Häufigkeitsverteilungen H in mindestens zwei orthogonalen Richtungen (x, y) ermittelt werden.

4. Verfahren nach einem der vorangehenden Ansprüche, **dadurch gekennzeichnet, dass** eine Bildvorverarbeitung erfolgt, z.B. durch Binarisierung und Skelettierung.

5. Verfahren nach einem der vorangehenden Ansprüche, **dadurch gekennzeichnet, dass** eine Klasseneinteilung Hc einer Häufigkeitsverteilung vorgenommen wird, wobei mindestens ein charakteristischer Wert für jede Klasse als Merkmalswert Ci bestimmt wird.

6. Verfahren nach einem der vorangehenden Ansprüche, **dadurch gekennzeichnet, dass** das Aufnahmebild I in mehrere Segmente IS unterteilt wird und dass die Häufigkeitsverteilungen H der Merkmale (L, G, K, B) für jedes Segment IS bestimmt werden.

7. Verfahren nach einem der vorangehenden Ansprüche, **dadurch gekennzeichnet, dass** der Identifikationscode C aus einem Bildausschnitt IA abgeleitet wird, welcher das Zentrum Z des Fingerabdruckbildes und dessen Umgebung ZU umfasst.

8. Verfahren nach einem der vorangehenden Ansprüche, **dadurch gekennzeichnet**, das die Länge des Identifikationscodes C so gewählt wird, dass die Genauigkeitsanforderungen bzw. Erkennungssicherheit (FAR, FRR) für eine gewünschte Anwendung erfüllt werden.

9. Verfahren nach einem der vorangehenden Ansprüche, **dadurch gekennzeichnet**, das Teilcodes C1, C2 der Merkmale unterschiedlich bestimmt und/oder zum Codevergleich unterschiedlich eingesetzt werden.

10. Verfahren nach einem der vorangehenden Ansprüche, **dadurch gekennzeichnet, dass** definierte einzelne Bifurkationen B als Merkmale verwendet werden.

11. Verfahren nach Anspruch 10, **dadurch gekennzeichnet, dass** die Merkmale Bifurkationen B mittels neuronaler Netze direkt aus dem digitalen Grauwertbild bestimmt werden.

12. Verfahren nach Anspruch 10, **dadurch gekennzeichnet, dass** die Merkmale Bifurkationen B klassifiziert werden nach ihrem Öffnungswinkel Wb und/oder nach ihrer Lage im Fingerabdruckbild.

13. Verfahren nach Anspruch 10, **dadurch gekennzeichnet, dass** zur Klassifikation eine Bifurkationspriorität BP definiert wird, wobei die Bifurkationspriorität zunimmt mit grösserem Öffnungswinkel Wb und mit abnehmendem Abstand RBi zum Bildzentrum, z.B. definiert als BP = Wb/RBi.

14. Verfahren nach Anspruch 1, **dadurch gekennzeichnet, dass** Häufigkeitsverteilungen HK des Merkmals Krümmungen K sowie komprimierte Merkmalswerte des Merkmals Bifurkationen B bestimmt werden.

**15.** Verfahren nach Anspruch 1, **dadurch gekennzeichnet, dass**
Häufigkeitsverteilungen HB des Merkmals Bifurkationen B bestimmt und daraus komprimierte Merkmalswerte Ci abgeleitet werden.

**16.** Verfahren nach einem der vorangehenden Ansprüche, **dadurch gekennzeichnet, dass** ein zentraler Bezugspunkt als Koordinaten-Nullpunkt des Fingerabdrucks definiert wird.

**17.** Verfahren nach Anspruch 16, **dadurch gekennzeichnet, dass** ein Krümmungsradien-Schwerpunkt Km als zentraler Bezugspunkt bestimmt wird oder dass die Varianz Hvar der Gradientenverteilung in Bildsegmenten IS bestimmt wird und der zentrale Bezugspunkt durch das Segment bestimmt wird, welches ein Maximum der Varianz aufweist.

**18.** Verfahren nach einem der vorangehenden Ansprüche, **dadurch gekennzeichnet, dass** mittels Führungs- und Ausrichtungsmitteln (32) bei der Bildaufnahme die Fingerlängsachse (y) und ein zentraler Bezugspunkt mindestens approximativ festgelegt werden.

**19.** Verfahren nach Anspruch 1, **dadurch gekennzeichnet, dass**
Häufigkeitsverteilungen HG des Merkmals Gradienten G sowie komprimierte Merkmalswerte des Merkmals Bifürkationen B bestimmt werden.

**20.** Verfahren nach Anspruch 19, **dadurch gekennzeichnet, dass** der Identifikationscode C gebildet wird aus Gradientenmerkmalen für jedes Segment IS eines Gradientengitters und aus klassifizierten Bifurkationen B.

**21.** Verfahren nach einem der vorangehenden Ansprüche, **dadurch gekennzeichnet, dass** Teilcodes gebildet werden und dass ein Vergleich Ca - Cb mit einer grossen Menge von Vergleichscodes Cb einer Datenbank (48) entsprechend den Teilcodes stufenweise erfolgt.

**22.** Verfahren nach Anspruch 21, **dadurch gekennzeichnet, dass** der stufenweise Vergleich mittels Gradientensegmenten und der Methode der Quadranten-Unterteilung (Quad trees) erfolgt.

**23.** Verfahren nach einem der vorangehenden Ansprüche, **dadurch gekennzeichnet, dass** ein aktueller Identifikationscode Ca aufgenommen und bestimmt wird und mit einem in einem zugeordneten Identifikationsmedium IM gespeicherten persönlichen Vergleichscode Cb mittels einer zugeordneten Lesestation WR dezentral verglichen wird.

**24.** Verfahren nach einem der vorangehenden Ansprüche, **dadurch gekennzeichnet, dass** der Identifikationscode C sequentiell und/oder iterativ ermittelt wird.

**25.** Vorrichtung zur Ermittlung eines Identifikationscodes aus Fingerabdruckbildern bzw. aus digitalen Grauwertbildern, wobei mindestens zwei der folgenden unabhängigen Merkmale: Linienabstände L, Gradienten G, Krümmungen K und Bifurkationen B erfasst werden, aus denen Merkmalswerte bestimmt werden, mit einem elektronischen Bildaufnahmegerät (31), einer Station mit einer Auswertungselektronik (34) und mit Auswertungsalgorithmen (35) zur Bestimmung eines Identifikationscodes C, Ca und zur Durchführung eines Codevergleichs Ca - Cb mit einem gespeicherten Vergleichscode Cb sowie mit Zulassungsfunktionen (46) zur Steuerung von zugeordneten Funktionsstationen, **dadurch gekennzeichnet, dass**
mindestens zwei der drei Merkmale Gradienten G, Krümmungen K und Bifurkationen B ausgewählt und daraus je komprimierte Merkmalswerte Ci gebildet werden,
wobei mindestens eines der Merkmale Gradienten G oder Krümmungen K ausgewählt wird und davon Häufigkeitsverteilungen HG oder HK bestimmt werden,
dass aus den Häufigkeitsverteilungen charakteristische Werte (z.B. Mittelwert, Varianz, Maximum) als komprimierte Merkmalswerte Ci bestimmt werden und wobei alle komprimierten Merkmalswerte Ci der ausgewählten Merkmale als Vektorkomponenten zusammen den Identifikationscode C bilden.

**26.** Vorrichtung nach Anspruch 25, **gekennzeichnet durch** Führungs- und Ausrichtungsmittel (32) mit einem seitlichen und einem vorderen Anschlag zur Ausrichtung und Positionierung von einem oder von zwei nebeneinanderliegenden Aufnahme-Fingern (1, 2).

**27.** Vorrichtung nach Anspruch 25 oder 26, **dadurch gekennzeichnet, dass** der Codevergleich Ca - Cb dezentral erfolgt.

28. Vorrichtung nach einem der Ansprüche 25 bis 27, **gekennzeichnet durch** ein zugeordnetes Identifikationsmedium IM einer berechtigten Person, welches den Vergleichscode Cb der Person und weitere Informationen enthält zur codierten Kommunikation (40) mit einer zugeordneten Lesestation WR.

29. Vorrichtung nach Anspruch 28, **dadurch gekennzeichnet, dass** der aktuelle Code Ca an das Identifikationsmedium IM übermittelt wird und dass der Codevergleich mit dem Vergleichscode Cb mittels des Prozessors (42) des Identifikationsmediums IM ausgeführt wird.

30. Vorrichtung nach Anspruch 25, **gekennzeichnet durch** ein übergeordnetes System (47) mit einem Leit-Rechner und mit einer Datenbank (48) für Vergleichscodes Cb und mit dezentralen Funktionsstationen (46).

31. Identifikationsmedium IM für eine berechtigte Person mit einem gespeicherten Identifikationscode C der Person welcher aus Fingerabdruckbildern bzw. aus digitalen Grauwertbildern ermittelt wird, wobei mindestens zwei der folgenden unabhängigen Merkmale: Linienabstände L, Gradienten G, Krümmungen K und Bifurkationen B erfasst werden, aus denen Merkmalswerte bestimmt werden zur codierten Kommunikation (40) mit einer zugeordneten Lesestation WR, **dadurch gekennzeichnet, dass**
mindestens zwei der drei Merkmale Gradienten G, Krümmungen K und Bifurkationen B ausgewählt und daraus je komprimierte Merkmalswerte Ci gebildet werden,
wobei mindestens eines der Merkmale Gradienten G oder Krümmungen K ausgewählt wird und davon Häufigkeitsverteilungen HG oder HK bestimmt werden,
dass aus den Häufigkeitsverteilungen charakteristische Werte (z.B. Mittelwert, Varianz, Maximum) als komprimierte Merkmalswerte Ci bestimmt werden und wobei alle komprimierten Merkmalswerte Ci der ausgewählten Merkmale als Vektorkomponenten zusammen den Identifikationscode C bilden.

32. Identifikationsmedium nach Anspruch 31 mit Zulassungs- und Funktionsberechtigungen für zugeordnete Funktionsstationen (46).

**Claims**

1. Method for determination of an identification code from fingerprint images or from digital grey scale value images, wherein that at least two of the following independent features: ridge distances L, gradients G, curvatures K and bifurcations B are registered and feature values are determined therefrom, **characterized in that**
at least two of the three features gradients G, curvatures K and bifurcations B are selected and from each, compressed feature values Ci are composed
whereby at least one of the features gradients G or curvatures K is selected and therefrom histograms HG or HK are determined,
that from the histograms characteristic values (e.g. mean value, variance, maximum) are determined as compressed feature values Ci
and wherein all compressed feature values Ci of the selected features as vector components, together form the identification code C.

2. Method according to claim 1, **characterized in that** histograms HG, HK of both independent features gradients G and curvatures K are determined.

3. Method according to claim 1 or 2, **characterized in that** the histograms H are determined in at least two orthogonal directions (x, y).

4. Method according to one of the preceding claims, **characterized in that** an image pre-processing is carried out, e.g. by means of binarization and skeletation.

5. Method according to one of the preceding claims, **characterized in that** a classification Hc of a histogram is carried out, whereby at least one characteristic value for each class is determined as a feature value Ci.

6. Method according to one of the preceding claims, **characterized in that** the recording image I is subdivided into several segments IS and that the histograms H of features (L, G, K, B) are determined for each segment IS.

**7.** Method according to one of the preceding claims, **characterized in that** the identification code C is derived from an image section IA which comprises the center Z of the fingerprint image and its surrounding ZU.

**8.** Method according to one of the preceding claims, **characterized in that** the length of the identification code C is chosen such that the demand for precision or the recognition security respectively (FAR, FRR) are fulfilled for a desired application.

**9.** Method according to one of the preceding claims, **characterized in that** partial codes C1, C2 of the features are determined differently and/or used differently for the code evaluation.

**10.** Method according to one of the preceding claims, **characterized in that** defined individual bifurcations B are used as features.

**11.** Method according to claim 10, **characterized in that** the features bifurcations B are determined directly from the digital grey scale image by means of neuronal grids.

**12.** Method according to claim 10, **characterized in that** the features bifurcations B are classified according to their opening angle Wb and/or according to their position in the fingerprint.

**13.** Method according to claim 10, **characterized in that** for classification a bifurcation priority BP is defined, whereby the bifurcation priority increases as the opening angle Wb increases and as the distance RBi to the image center decreases, e.g. defined as BP = Wb/RBi.

**14.** Method according to claim 1, **characterized in that** histograms HK of the feature curvatures K as well as compressed feature values of the feature bifurcations B are determined.

**15.** Method according to claim 1, **characterized in that** histograms HB of the feature bifurcations B are determined and compressed feature values Ci are derived therefrom.

**16.** Method according to one of the preceding claims, **characterized in that** a central reference point is defined as origin of coordinates of the fingerprint image.

**17.** Method according to claim 16, **characterized in that** a curvature radius gravity center Km is defined as a central reference point or that the variance Hvar of the gradient distribution in image segments IS is determined and the central reference point is determined by the segment which has a maximum variance.

**18.** Method according to one of the preceding claims, **characterized in that** by means of guiding and positioning means (32) the longitudinal axis (y) of the finger and a central reference point are determined at least approximately when recording the image.

**19.** Method according to claim 1, **characterized in that** histograms HG of the feature gradients G and compressed feature values of the feature bifurcations B are determined.

**20.** Method according to claim 19, **characterized in that** the identification code C is formed from gradient characteristics for each segment IS of a gradient grid and of classified bifurcations B.

**21.** Method according to one of the preceding claims, **characterized in that** partial codes are formed and that a comparison Ca - Cb with a large quantity of reference codes Cb of a data bank (48) is carried out in steps corresponding to the partial codes.

**22.** Method according to claim 21, **characterized in that** the evaluation in steps is carried out by means of gradient segments and the method of quadrant-sub-division (quad trees).

**23.** Method according to one of the preceding claims, **characterized in that** an actual identification code Ca is recorded and determined and compared locally by means of an corresponding reading station WR to a personal reference code Cb stored in a corresponding identification medium IM.

**24.** Method according to one of the preceding claims, **characterized in that** the identification code C is determined in a sequential and/or iterative manner.

25. Device for determination of an identification code from fingerprint images or from digital grey scale value images, wherein that at least two of the following independent features: ridge distances L, gradients G, curvatures K and bifurcations B are registered and feature values are determined therefrom with an electronic image recording device (31), a station with evaluation electronics (34) and with evaluation algorithms (35) for determination of an identification code C, Ca and for carrying out a code comparison Ca - Cb with a stored reference code Cb as well as with an access function (46) for the control of corresponding function stations, **characterized in that** at least two of the three features gradients G, curvatures K and bifurcations B are selected and from each, compressed feature values Ci are composed whereby at least one of the features gradients G or curvatures K is selected and therefrom histograms HG or HK are determined, that from the histograms characteristic values (e.g. mean value, variance, maximum) are determined as compressed feature values Ci and wherein all compressed feature values Ci of the selected features as vector components, together form the identification code C.

26. Device according to claim 25, **characterized by** guiding and positioning means (32) with a lateral and a front limit stop for orientation and positioning of one or two adjacent fingers (1, 2) to be reported.

27. Device according to claim 25 or 26, **characterized in that** the code comparison Ca - Cb is carried out locally.

28. Device according to one of claims 25 to 27, **characterized by** a corresponding identification medium IM of an authorized person which contains the reference code Cb of the person and further information for encoded communication (40) with a corresponding reading station WR.

29. Device according to claim 28, **characterized in that** the actual code Ca is transmitted to the identification medium IM and that the code comparison with the reference code Cb is carried out by means of the processor (42) of the identification medium IM.

30. Device according to claim 25, **characterized by** a master system (47) with a main processor and with a data bank (48) for reference codes Cb and with local function stations (46).

31. Identification medium IM for an authorized person with a stored reference code C of the person, which code is determined from fingerprint images or from digital grey scale value images, wherein that at least two of the following independent features: ridge distances L, gradients G, curvatures K and bifurcations B are registered and feature values are determined therefrom, for encoded communication (40) with a corresponding reading station WR, **characterized in that** at least two of the three features gradients G, curvatures K and bifurcations B are selected and from each, compressed feature values Ci are composed whereby at least one of the features gradients G or curvatures K is selected and therefrom histograms HG or HK are determined, that from the histograms characteristic values (e.g. mean value, variance, maximum) are determined as compressed feature values Ci and wherein all compressed feature values Ci of the selected features as vector components, together form the identification code C.

32. Identification medium according to claim 31 with access and function authorizations for corresponding function stations (46).

**Revendications**

1. Procédé pour la détermination d'un code d'identification à partir d'images d'empreintes digitales ou d'images numériques en valeurs de gris, dans lequel au moins deux des caractéristiques indépendantes suivantes: écarts L entre les lignes, gradients G, courbures K et bifurcations B sont saisies, des valeurs caractéristiques étant déterminées à partir d'elles, **caractérisé en ce que** :

au moins deux des trois caractéristiques gradients G, courbures K et bifurcations B sont sélectionnées et des valeurs caractéristiques comprimées Ci sont formées à partir de chacune,

au moins l'une des caractéristiques gradients G ou courbures K est sélectionnée et des répartitions de fréquences HG ou HK sont déterminées à partir d'elles,

des valeurs caractéristiques (par exemple valeur moyenne, variance, maximum) sont déterminées comme valeurs caractéristiques comprimées Ci à partir des répartitions en fréquence, toutes les valeurs caractéristiques comprimées Ci des caractéristiques sélectionnées formant ensemble le code d'identification C en tant que composantes vectorielles.

2. Procédé selon la revendication 1, **caractérisé en ce que** les répartitions de fréquences HG, HK des deux caractéristiques indépendantes, à savoir les gradients G et les courbures K, sont déterminées.

3. Procédé selon la revendication 1 ou 2, **caractérisé en ce que** les répartitions de fréquences H dans au moins deux directions perpendiculaires (x, y) sont déterminées.

4. Procédé selon l'une des revendications précédentes, **caractérisé en ce que** l'on y effectue un prétraitement d'image, par exemple par numérisation et squelettage.

5. Procédé selon l'une des revendications précédentes, **caractérisé en ce que** l'on entreprend une division en classe Hc d'une répartition en fréquence, au moins une valeur caractéristique de chaque classe étant déterminée en tant que valeur caractéristique Ci.

6. Procédé selon l'une des revendications précédentes, **caractérisé en ce que** l'image enregistrée I est divisée en plusieurs segments IS, et **en ce que** les répartitions en fréquence H des caractéristiques (L, G, K, B) sont déterminées pour chaque segment IS.

7. Procédé selon l'une des revendications précédentes, **caractérisé en ce que** le code d'identification C est dérivé d'une partie d'image IA qui comprend le centre Z de l'empreinte digitale et son environnement ZU.

8. Procédé selon l'une des revendications précédentes, **caractérisé en ce que** la longueur du code d'identification C est sélectionnée de telle sorte que les spécifications de précision ou la sécurité de reconnaissance (FAR, FRR) pour une application souhaitée sont satisfaites.

9. Procédé selon l'une des revendications précédentes, **caractérisé en ce que** des codes partiels C1, C2 des caractéristiques sont déterminés différemment et/ou sont utilisés différemment pour la comparaison des codes.

10. Procédé selon l'un des revendications précédentes, **caractérisé en ce que** des bifurcations individuelles définies B sont utilisées comme caractéristiques.

11. Procédé selon la revendication 10, **caractérisé en ce que** les caractéristiques bifurcations B sont déterminées directement au moyen de réseaux neuraux à partir de l'image numérique en valeurs de gris.

12. Procédé selon la revendication 10, **caractérisé en ce que** les caractéristiques bifurcations B sont classées en fonction de leur angle d'ouverture Wb et/ou en fonction de leur position dans l'image de l'empreinte digitale.

13. Procédé selon la revendication 10, **caractérisé en ce que** pour la classification, on utilise une priorité de bifurcation BP, la priorité de bifurcation augmentant lorsque l'angle d'ouverture Wb augmente et lorsque la distance RBi par rapport au centre de l'image diminue, BP étant définie comme BP = Wb/Rbi.

14. Procédé selon la revendication 1, **caractérisé en ce que** les répartitions en fréquence HK de la caractéristique courbures K ainsi que les valeurs caractéristiques comprimées de la caractéristique bifurcations B sont déterminées.

15. Procédé selon la revendication 1, **caractérisé en ce que** les répartitions en fréquence HB de la caractéristique bifurcations B sont déterminées, des valeurs caractéristiques comprimées Ci en étant déduites.

16. Procédé selon l'une des revendications précédentes, **caractérisé en ce qu'**un point central de référence est défini comme point d'origine des coordonnées de l'empreinte digitale.

**17.** Procédé selon la revendication 16, **caractérisé en ce qu'**un centre de gravité Km des rayons de courbure est défini comme point central de référence, ou **en ce que** la variance Hvar de la répartition des gradients est déterminée dans des segments d'image IS, le point central de référence étant déterminé par le segment qui présente une variance maximale.

**18.** Procédé selon l'une des revendications précédentes, **caractérisé en ce qu'**à l'enregistrement d'images, par des moyens (32) de guidages et d'orientations, l'axe longitudinal (y) du doigt et un point central de référence sont déterminés, aux moins approximativement.

**19.** Procédé selon la revendication 1, **caractérisé en ce que** des répartitions en fréquence HG de la caractéristique gradients G ainsi que des valeurs caractéristiques comprimées de la caractéristique bifurcations B sont déterminées.

**20.** Procédé selon la revendication 19, **caractérisé en ce que** le code d'identification C est formé à partir des caractéristiques des gradients pour chaque segment IS d'une grille de gradients et à partir de bifurcations B classées.

**21.** Procédé selon l'une des revendications précédentes, **caractérisé en ce que** des codes partiels sont formés et **en ce qu'**une comparaison Ca - Cb est réalisée par étapes avec une grande quantité de codes de comparaison Cb d'une base de données (48), en fonction du code partiel.

**22.** Procédé selon la revendication 21, **caractérisé en ce que** la comparaison par étape s'effectue au moyen des segments de gradients et de la méthode de division par quadrants ("quad trees").

**23.** Procédé selon l'une des revendications précédentes, **caractérisé en ce qu'**un code d'identification effectif Ca est enregistré et déterminé pour être comparé de manière décentralisée au moyen d'un poste de lecture WR associé à un code comparatif personnel Cb conservé en mémoire dans un support d'identification.

**24.** Procédé selon l'une des revendications précédentes, **caractérisé en ce que** le code d'identification C est déterminé séquentiellement et/ou itérativement.

**25.** Dispositif pour la saisie d'un code d'identification à partir d'images d'empreintes digitales ou d'images numériques en valeurs de gris, dans lequel au moins deux des caractéristiques indépendantes suivantes: écarts L entre les lignes, gradients G, courbures K et bifurcations B sont saisies, des valeurs caractéristiques étant déterminées à partir d'elles, lequel dispositif présente un appareil électronique (31) d'enregistrement d'images, un poste doté d'une électronique d'évaluation (34) et d'algorithmes d'évaluation (35) pour la détermination d'un code d'identification C, Ca et pour l'exécution d'une comparaison Ca - Cb entre le code et un code de comparaison Cb conservé en mémoire, ainsi que de fonctions d'autorisation (46) pour la commande de postes fonctionnels associés, **caractérisé en ce que** :

au moins deux des trois caractéristiques gradients G, courbures K et bifurcations B sont sélectionnées, des valeurs caractéristiques comprimées Ci étant formées à partir de chacune d'elles,
au moins l'une des caractéristiques gradients G ou courbures K est sélectionnée, et des répartitions de fréquence HG ou HK sont déterminées à partir d'elles,
à partir des répartitions en fréquence, des valeurs caractéristiques (par exemple valeur moyenne, variance, maximum) sont déterminées en tant que valeurs caractéristiques comprimées Ci, toutes les valeurs caractéristiques comprimées Ci des caractéristiques sélectionnées formant ensemble le code d'identification C en tant que composantes vectorielles.

**26.** Dispositif selon la revendication 25, **caractérisé par** des moyens (32) de guidage et d'orientation dotés d'une butée latérale et d'une butée avant pour l'orientation et le positionnement d'un ou de deux doigts à enregistrer (1, 2) situés l'un à côté de l'autre.

**27.** Dispositif selon la revendication 25 ou 26, **caractérisé en ce que** la comparaison de codes Ca - Cb s'effectue de façon décentralisée.

**28.** Dispositif selon l'une des revendications 25 à 27, **caractérisé par** un support d'identification IM associé d'une personne autorisée, qui contient le code comparatif Cb de la personne et d'autres informations, pour la communication codée (40) avec un poste de lecture WR associé.

**29.** Dispositif selon la revendication 28, **caractérisé en ce que** le code effectif Ca est transmis au support d'identification IM et **en ce que** la comparaison au code comparatif Cb est exécutée au moyen du processeur (42) du support d'identification IM.

**30.** Dispositif selon la revendication 25, **caractérisé par** un système (47) d'ordre hiérarchiquement supérieur, doté d'un calculateur de guidage et d'une base de données (48) de codes de comparaison Cb ainsi que de postes fonctionnels (46) décentralisés.

**31.** Support d'identification IM pour une personne autorisée, doté d'un code d'identification C de la personne qui est conservé en mémoire et qui a été déterminé à partir d'images d'empreintes digitales ou d'images numériques en valeurs de gris, dans lequel au moins deux des caractéristiques indépendantes suivantes: écarts entre lignes L, gradients G, courbures K et bifurcations B à partir desquelles des valeurs caractéristiques sont déterminées, étant déterminées en vue d'une communication codée (40) avec un poste de lecture associé, **caractérisé en ce que** :

au moins deux des trois caractéristiques gradients G, courbures K et bifurcations B sont sélectionnées, et des valeurs caractéristiques comprimées Ci respectives étant formées à partir d'elles,
au moins l'une des caractéristiques gradients G ou courbures K est sélectionnée, des répartitions en fréquence HG ou HK étant déterminées à partir d'elles,
des valeurs caractéristiques (par exemple valeur moyenne, variance, maximum) sont déterminées à partir des répartitions en fréquence en tant que valeurs caractéristiques comprimées Ci, toutes les valeurs caractéristiques comprimés Ci des caractéristiques sélectionnées formant ensemble le code d'identification C en tant que composantes vectorielles.

**32.** Support d'identification selon la revendication 31, avec des autorisations d'accès et de fonctionnement pour des postes fonctionnels (46) associés.

FIG. 1

FIG. 2

FIG. 3

FIG. 4

FIG. 5

FIG. 6

FIG. 7

FIG. 8

EP 0 996 924 B1

I1

FIG. 9

I2a

FIG. 10

I2a

I2b

20

20

I2a

I2a

I2a

FIG. 11

Bi

FIG. 12

LBi-j

B1

LB1-2

B2

B3

LB1-4

LB1-10

B4

LB10-1

B7

B5

B6

B8

B9

B10

FIG. 13

B11

B12

FIG. 14

FIG. 15

FIG. 16

FIG.17

FIG.18

## FIG. 19a

## FIG. 19b

## FIG. 20

$34$ — $Ia \rightarrow L, G, K, B$

$H, Bi$

$35$ — $Ci \rightarrow Ca$

$Cb$ ($Ca$-$Cb$)

$Ca$-$Cb$ — WR

FIG. 21